# EUROPÄISCHE PATENTSCHRIFT

(11) **EP 3 909 156 B1**
(45) Veröffentlichungstag und Bekanntmachung des Hinweises auf die Patenterteilung: **20.07.2022**
(21) Anmeldenummer: 20764972.4
(22) Anmeldetag: 28.08.2020
(51) Int. Cl.: H04W 4/44, H04H 60/43, H04H 60/51, H04H 60/66

(54) **BETREIBEN EINES FUNKEMPFANGSGERÄTS**
OPERATING A WIRELESS RECEIVER
FONCTIONNEMENT D'UN RÉCEPTEUR SANS FIL

(30) Priorität: 03.09.2019 DE 102019213321
(43) Veröffentlichungstag der Anmeldung: 17.11.2021
(73) Patentinhaber: Audi AG, 85045 Ingolstadt (DE)
(72) Erfinder: BISCHOF, Klaus, 91161 Hilpoltstein (DE)
(86) Internationale Anmeldenummer: PCT/EP2020/074100
(87) Internationale Veröffentlichungsnummer: WO 2021/043681

(56) Entgegenhaltungen:
- US-A1- 2011 159 800
- US-A1- 2014 213 175

## Beschreibung

Die Erfindung betrifft Verfahren zum Betreiben eines Funkempfangsgeräts, das über Kommunikationskanäle übertragene Stationssignale von Sendestationen empfängt und ein ausgewähltes der Stationssignale ausgibt. Darüber hinaus betrifft die Erfindung auch Verfahren zum Betreiben einer Servervorrichtung. Weiterhin betrifft die Erfindung Funkempfangsgeräte, die ausgebildet sind, über Kommunikationskanäle übertragende Stationssignale von Sendestationen zu empfangen und ein ausgewähltes der Stationssignale auszugeben. Ferner betrifft die Erfindung ein Kraftfahrzeug mit einem Funkempfangsgerät. Schließlich betrifft die Erfindung auch Servervorrichtungen.

Funkempfangsgeräte, insbesondere Rundfunkempfangsgeräte, sind in einer Vielzahl von Ausgestaltungen im Stand der Technik bekannt, sodass es eines gesonderten druckschriftlichen Nachweises hierfür nicht bedarf. Funkempfangsgeräte dienen dazu, zumindest ein unidirektional von einer Sendestation ausgesendetes Stationssignal zu empfangen, um daraus Daten beziehungsweise Informationen zu gewinnen, die an einen Nutzer des Funkempfangsgeräts ausgegeben werden können. Zu diesem Zweck kann der Nutzer vorzugsweise ein Stationssignal einer Sendestation zur Ausgabe am Funkempfangsgerät auswählen, beispielsweise indem das Funkempfangsgerät entsprechend auf einen Rundfunkkanal für das ausgewählte Stationssignal eingestellt wird.

Die Informationen beziehungsweise Daten werden von der jeweiligen Sendestation mittels des Stationssignals bereitgestellt, welches dann über einen vorgegebenen Kommunikationskanal ausgesendet wird. Bei einer Rundfunkstation kann dies durch einen Rundfunksender realisiert sein, der wenigstens einen entsprechenden Funkkanal für das übermitteln des Stationssignals bereitstellt. Rundfunk ist demnach insbesondere eine unidirektionale Informations- beziehungsweise Datenübertragung von der Rundfunkstation zum Rundfunkempfänger unter Nutzung des Stationssignals. Bei Rundfunk ist eine Informationsübermittlung in umgekehrter Richtung in der Regel nicht vorgesehen. Üblicherweise aber nicht ausschließlich dient das Stationssignal der Sendestation dazu, Informationen beziehungsweise Daten in Form von Video, Audio und/oder dergleichen zu übermitteln, das heißt, beispielsweise Fernsehen oder Radio.

Insbesondere bei mobilem Audioempfang mittels eines Audiorundfunkempfängers, umgangssprachlich auch "Radio" genannt, gelegentlich aber auch beim stationären Empfang mittels eines Funkempfangsgeräts kann das Problem auftreten, dass das vom Nutzer ausgewählte Stationssignal einer Sendestation über einen am Funkempfangsgerät eingestellten Kommunikationskanal nur mangelhaft, beispielsweise gestört, empfangen werden kann. Der Nutzer kann dann versuchen, durch Ändern der Einstellung beziehungsweise Wahl eines anderen Kommunikationskanals, beispielsweise eines anderen Funkkanals bei Rundfunk, den Empfang zu verbessern. Moderne Funkempfangsgeräte, insbesondere Autoradios, können darüber hinaus über eine automatische Umschaltungsmöglichkeit verfügen, bei der das Autoradio beziehungsweise der Audiorundfunkempfänger automatisch von einem ersten Rundfunkkanal auf einen zweiten Rundfunkkanal, die beide das gleiche Stationssignal aussenden, umgeschaltet wird, um den Empfang zu verbessern.

Trotzdem kann das Problem auftreten, dass die Ausgabe des Stationssignals gestört sein kann, beispielsweise weil das Funkempfangsgerät zunächst die Kommunikationskanäle, die empfangbar sind, untersucht, um zu ermitteln, über welchen der empfangbaren Kommunikationskanäle das gewünschte beziehungsweise ausgewählte der Stationssignale zuverlässig empfangen werden kann. Hierzu wird in der Regel ein gewisser Zeitraum benötigt, währenddessen die Ausgabe des Stationssignals beispielsweise gestört und/oder auch unterbrochen sein kann.

Aus der DE 10 2014 226 142 A1 ist ein Verfahren zum Empfang von Rundfunksignalen in einem Fahrzeug und ein Rundfunkempfangsgerät bekannt. Unter Nutzung von Diversity soll der Funkempfang von Rundfunk verbessert werden können. Zu diesem Zweck befasst sich die DE 10 2014 226 142 A1 mit der Frage, wie einen effektivere Zuordnung von Empfangspfaden zu Wiedergabegeräten erreicht werden kann. Hierzu soll eine Geschwindigkeit des Fahrzeugs ermittelt werden, in welchem das Rundfunkempfangsgerät angeordnet ist, wobei eine Anzahl von Empfangspfaden, die für einen Rundfunkempfang genutzt werden soll, abhängig von der Geschwindigkeit des Fahrzeugs vorgegeben werden soll.

Weiterhin offenbart die US 2011/0159800 A1 ein Datenbasiskonstruktionssystem und ein Rundfunkempfangssystem. Darüber hinaus offenbart die US 2014/0213175 A1 ein Verfahren und ein System zum Erreichen eines kontinuierlichen Hörerlebnisses für eine Fahrzeugradiokopfeinheit.

Ferner offenbart die US 2011/0167016 A1 eine kartenbasierte Radionutzungsanalyse. Schließlich offenbart die WO 03/049339 A2 ein System und ein Verfahren zum Ermitteln von flächendeckenden Fahrzeugradiohörerstatistiken.

Gerade im mobilen Bereich erweist es sich als nachteilig, dass auch unter Nutzung des automatischen Umschaltens von Rundfunkkanälen der Empfang weiterhin gestört sein kann. Im Stand der Technik sind zwar spezielle Technologien hinsichtlich eines "weichen" Umschaltens bekannt, jedoch kann insbesondere bei einer Bewegung des Funkempfangsgeräts nicht gänzlich verhindert werden, dass teilweise erhebliche Störungen auftreten. Schließlich ist zu beachten, dass auch das Umschalten selbst, insbesondere wenn es häufig auftritt, zu Störungen bezüglich der Ausgabe des Stationssignals führen kann.

Aufgabe der Erfindung ist es, den Empfang und die Ausgabe eines ausgewählten Stationssignals zu verbessern.

Als Lösung werden mit der Erfindung Verfahren zum Betreiben eines Funkempfangsgeräts, Verfahren zum Betreiben einer Servervorrichtung, Funkempfangsgeräte, ein Kraftfahrzeug mit einem Funkempfangsgerät sowie Servervorrichtungen gemäß den unabhängigen Ansprüchen vorgeschlagen.

Vorteilhafte Weiterbildungen ergeben sich durch Merkmale der abhängigen Ansprüche.

Bezüglich eines Verfahrens zum Betreiben eines Funkempfangsgeräts gemäß einem ersten Aspekt, das über Kommunikationskanäle übertragene Stationssignale von Sendestationen empfängt und ein ausgewähltes der Stationssignale ausgibt, wobei das Verfahren die folgenden Schritte umfasst:
- Ermitteln der Kommunikationskanäle für ein jeweiliges der Stationssignale, über die das jeweilige der Stationssignale übertragen wird, und
- Erfassen von Empfangseigenschaften für die ermittelten Kommunikationskanäle,
wird insbesondere vorgeschlagen, dass das Verfahren die weiteren Schritte umfasst:
- Erfassen von Positionsdaten des Funkempfangsgeräts,
- Zuordnen der Positionsdaten zu den bezüglich der ermittelten Kommunikationskanäle erfassten Empfangseigenschaften, wobei für wenigstens eines der Stationssignale ein positionsbezogener Empfangsdatensatz ermittelt wird, und
- Übermitteln des wenigstens einen positionsbezogenen Empfangsdatensatzes an eine Servervorrichtung, um den wenigstens einen positionsbezogenen Empfangsdatensatz durch die Servervorrichtung abrufbar zu speichern, wobei
wenigstens eines der Stationssignale über wenigstens zwei voneinander unterschiedliche Kommunikationskanäle empfangen wird, Differenzdaten wenigstens bezüglich der jeweiligen normierten Lautstärken und eines jeweiligen relativen Zeitversatzes des Stationssignals ermittelt und durch den positionsbezogenen Empfangsdatensatz umfasst werden.

Bezüglich eines Verfahrens zum Betreiben eines Funkempfangsgeräts gemäß einem zweiten Aspekt, das über Kommunikationskanäle übertragene Stationssignale von Sendestationen empfängt und ein ausgewähltes der Stationssignale ausgibt, wird insbesondere vorgeschlagen, dass das Verfahren die Schritte umfasst, dass Positionsdaten des Funkempfangsgeräts ermittelt werden, zumindest die Positionsdaten sowie Daten zum ausgewählten der Stationssignale an eine positionsbezogene Empfangsdatensätze abrufbar speichernde Servervorrichtung übermittelt werden, als Reaktion auf die an die Servervorrichtung übermittelten Daten anhand der Positionsdaten einen positionsbezogenen Empfangsdatensatz für das ausgewählte der Stationssignale vom Funkempfangsgerät empfangen werden und das Funkempfangsgerät zum Empfangen und Ausgeben des ausgewählten der Stationssignale den Kommunikationskanal anhand des empfangenen positionsbezogenen Empfanqsdatensatzes einstellt, wobei das ausgewählte der Stationssignale über wenigstens zwei voneinander unterschiedliche Kommunikationskanäle empfangen wird und Differenzdaten wenigstens bezüglich der jeweiligen normierten Lautstärken und eines jeweiligen relativen Zeitversatzes des Stationssignals, welche durch den positionsbezogenen Empfangsdatensatz umfasst werden, erhalten werden.

Bezüglich eines Verfahrens zum Betreiben eines Funkempfangsgeräts gemäß dem zweiten Aspekt, das über Kommunikationskanäle übertragene Stationssignale von Sendestationen empfängt und ein ausgewähltes der Stationssignale ausgibt, wird ferner insbesondere vorgeschlagen, dass das Verfahren die Schritte umfasst, dass Positionsdaten des Funkempfangsgeräts ermittelt werden, zumindest die Positionsdaten sowie Daten zum ausgewählten der Stationssignale an eine positionsbezogene Empfangsdatensätze abrufbar speichernde Servervorrichtung übermittelt werden, als Reaktion auf die an die Servervorrichtung übermittelten Daten Identifikationsdaten zu einem von der Servervorrichtung ermittelten Kommunikationskanal mit den günstigsten Empfangseigenschaften vom Funkempfangsgerät empfangen werden und das Funkempfangsgerät zum Empfangen und Ausgeben des ausgewählten der Stationssignale diesen Kommunikationskanal anhand der Identifikationsdaten einstellt.

Bezüglich eines Verfahrens zum Betreiben einer Servervorrichtung gemäß dem zweiten Aspekt wird insbesondere vorgeschlagen, dass von Funkempfangsgeräten übermittelte positionsbezogene Empfangsdatensätze, die wenigstens Positionsdaten des Funkempfangsgeräts und Empfangseigenschaften zu bezüglich über Kommunikationskanäle übertragenen Stationssignalen von Sendestationen enthalten, durch die Servervorrichtung empfangen und abrufbar gespeichert werden, wobei die Servervorrichtung von einem jeweiligen Empfangsgerät wenigstens Positionsdaten sowie Daten zu einem ausgewählten der Stationssignale empfängt, zu den Positionsdaten und den Daten zum ausgewählten der Stationssignale einen positionsbezogenen Empfangsdatensatz für das ausgewählte der Stationssignale ermittelt und diesen positionsbezogenen Empfangsdatensatz an das Empfangsgerät übermittelt. Bezüglich eines Verfahrens zum Betreiben einer Servervorrichtung gemäß dem zweiten Aspekt wird ferner insbesondere vorgeschlagen, dass von Funkempfangsgeräten übermittelte positionsbezogene Empfangsdatensätze, die wenigstens Positionsdaten des Funkempfangsgeräts und Empfangseigenschaften zu bezüglich über Kommunikationskanäle übertragenen Stationssignalen von Sendestationen enthalten, durch die Servervorrichtung empfangen und abrufbar gespeichert werden, wobei die Servervorrichtung von einem jeweiligen Empfangsgerät wenigstens Positionsdaten sowie Daten zu einem ausgewählten der Stationssignale empfängt, zu den Positionsdaten und den Daten zum ausgewählten der Stationssignale denjenigen der Kommunikationskanäle mit den günstigsten Empfangseigenschaften ermittelt und Identifikationsdaten zu diesem Kommunikationskanal an das Empfangsgerät übermittelt.

Bezüglich eines gattungsgemäßen Funkempfangsgeräts wird gemäß dem ersten Aspekt insbesondere vorgeschlagen, dass das Funkempfangsgerät ferner ausgebildet ist:
- die Kommunikationskanäle für ein jeweiliges der Stationssignale, über die das jeweilige der Stationssignale übertragen wird, zu ermitteln und
- Empfangseigenschaften für die ermittelten Kommunikationskanäle zu erfassen,
- Positionsdaten des Funkempfangsgeräts zu erfassen,
- die Positionsdaten zu den bezüglich der ermittelten Kommunikationskanäle erfassten Empfangseigenschaften zuzuordnen, um für wenigstens eines der Stationssignale einen positionsbezogenen Empfangsdatensatz zu ermitteln, und
- den wenigstens einen positionsbezogenen Empfangsdatensatz an eine Servervorrichtung zu übermitteln, wobei
das Funkempfangsgerät ausgebildet ist, wenigstens eines der Stationssignale über wenigstens zwei voneinander unterschiedliche Kommunikationskanäle zu empfangen, Differenzdaten wenigstens bezüglich der jeweiligen normierten Lautstärken und eines jeweiligen relativen Zeitversatzes des Stationssignals zu ermitteln und durch den positionsbezogenen Empfangsdatensatz zu umfassen.

Bezüglich eines gattungsgemäßen Funkempfangsgeräts wird gemäß dem zweiten Aspekt insbesondere vorgeschlagen, dass das Funkempfangsgerät ausgebildet ist, Positionsdaten des Funkempfangsgeräts zu ermitteln, zumindest die Positionsdaten sowie Daten zum ausgewählten der Stationssignale an eine positionsbezogene Empfangsdatensätze abrufbar speichernde Servervorrichtung zu übermitteln, als Reaktion auf die an die Servervorrichtung übermittelten Daten anhand der Positionsdaten einen positionsbezogenen Empfangsdatensatz für das ausgewählte der Stationssignale vom Funkempfangsgerät zu empfangen und das Funkempfangsgerät zum Empfangen und Ausgeben des ausgewählten der Stationssignale anhand des empfangenen positionsbezogenen Empfangsdatensatzes auf diesen Kommunikationskanal einzustellen, wobei das Funkempfangsgerät ausgebildet ist, das ausgewählte der Stationssignale über wenigstens zwei voneinander unterschiedliche Kommunikationskanäle zu empfangen und Differenzdaten, welche durch den positionsbezogenen Empfangsdatensatz umfasst sind, zu erhalten.

Bezüglich eines gattungsgemäßen Kraftfahrzeugs wird insbesondere vorschlagen, dass das Funkempfangsgerät gemäß der Erfindung ausgebildet ist.

Die Erfindung basiert unter anderem auf dem Gedanken, dass durch ein zentralisiertes Sammeln von Daten bezüglich positionsbezogener Empfangseigenschaften Daten zumindest von Funkempfangsgeräten gesammelt und bereitgestellt werden können, die auf Anfrage an ein jeweiliges Funkempfangsgerät übermittelt werden können, sodass das Funkempfangsgerät anhand dieser Daten, insbesondere der Identifikationsdaten, einen geeigneten Kommunikationskanal zum Empfangen und Ausgeben eines ausgewählten Stationssignals nahezu unverzüglich ermitteln und einstellen kann. Das Funkempfangsgerät braucht also nicht selbst beispielsweise durch Scannen sämtlicher Kommunikationskanäle einen geeigneten Kommunikationskanal beziehungsweise den Kommunikationskanal mit den günstigsten Empfangseigenschaften für seine aktuelle Position zu ermitteln.

Dabei umfasst die Erfindung vorzugsweise zwei Aspekte, wobei ein erster Aspekt sich damit befasst, die erforderlichen Daten zu sammeln, zentralisiert abrufbar zu speichern und zur Verfügung zu stellen. Ein zweiter Aspekt befasst sich damit, die gesammelten und zentralisiert abrufbar gespeicherten Daten für eine spezifische Nutzung durch ein jeweiliges Funkempfangsgerät verfügbar zu machen. Der erste Aspekt befasst sich daher mit dem Ermitteln beziehungsweise Sammeln von entsprechenden positionsbezogenen Empfangsdatensätzen, wohingegen der zweite Aspekt sich mit deren Nutzung befasst. Dabei eignet sich die Erfindung insbesondere dann, wenn gemäß dem ersten Aspekt positionsbezogene Empfangsdatensätze durch eine Vielzahl von Funkempfangsgeräten entsprechend ermittelt und an die Servervorrichtung übermittelt werden, wobei die positionsbezogenen Empfangsdatensätze für eine möglichst große Anzahl von unterschiedlichen Positionsdaten erfasst werden sollten. Dadurch kann unter anderem erreicht werden, dass insbesondere mobile Funkempfangsgeräte sehr schnell auf einen jeweiligen geeigneten Kommunikationskanal bezüglich eines auszugebenden Stationssignals eingestellt werden können, sodass Störungen und/oder Unterbrechungen der Ausgabe des ausgewählten der Stationssignale reduziert werden können. Die Erfindung ermöglicht es also, beispielsweise eine umfangreiche Datenbank zu positionsbezogenen Empfangseigenschaften durch die Servervorrichtung bereitzustellen, die nicht nur durch eine Vielzahl von Funkempfangsgeräten erstellt beziehungsweise weitergebildet sein kann, sondern die es darüber hinaus auch ermöglicht, beispielsweise durch die entsprechende Vielzahl an Daten eine hohe Qualität hinsichtlich der zur Nutzung an ein jeweiliges Funkempfangsgerät übermittelten Identifikationsdaten zu gewährleisten.

Wenigstens eines der Stationssignale wird über wenigstens zwei voneinander unterschiedliche Kommunikationskanäle empfangen, Differenzdaten wenigstens bezüglich der jeweiligen normierten Lautstärken und/oder eines jeweiligen relativen Zeitversatzes des Stationssignals ermittelt und durch den positionsbezogenen Empfangsdatensatz umfasst werden. Dadurch ist es möglich, vergleichende Daten bezüglich der Kommunikationskanäle zu erhalten, die ein spezifischen Stationssignal, welches das ausgewählten der Stationssignale sein kann, übertragen. Dies kann dazu genutzt werden, zu entscheiden, ob für eine Ausgabe des ausgewählten Stationssignals ein einzelner Kommunikationskanal oder auch mehrere Kommunikationskanäle gemeinsam genutzt werden können. Darüber hinaus kann auch ein Umschalten zwischen Kommunikationskanälen vorgesehen sein, und zwar abhängig davon, welcher Kommunikationskanal die günstigsten Empfangseigenschaften ermöglicht. Vorzugsweise ist dies für das ausgewählte der Stationssignale vorgesehen. Darüber hinaus ist es jedoch möglich, auch für ein Stationssignal, welches nicht das ausgewählte der Stationssignale ist, diese Verfahrensführung vorzusehen. Dadurch kann erreicht werden, dass eine Datenbank, die durch die Servervorrichtung bereitgestellt wird, mit möglichst vielen positionsbezogenen Empfangsdatensätzen gespeist werden kann, sodass eine umfangreiche Datenbank bereitgestellt werden kann, die Empfangsdatensätze für eine Vielzahl von Positionsdaten verfügbar halten kann. Je nach Bedarf können diese Empfangsdatensätze durch ein jeweiliges Funkempfangsgerät von der Servervorrichtung abgerufen werden.

Rundfunk im Sinne der Erfindung bezeichnet eine unidirektionale Kommunikation zwischen Kommunikationspartnern, hier einer Rundfunkstation und einem Rundfunkempfangsgerät, wobei die Kommunikation beispielsweise ausschließlich von einem der Kommunikationspartner zum anderen der Kommunikationspartner möglich ist. Natürlich kann eine jeweilige Rundfunkstation auch mehr als einen Rundfunksender nutzen, um ihr Stationssignal beziehungsweise Rundfunkstationssignal mittels der Kommunikationskanäle, die in diesem Fall Funkkanäle sind, auszusenden. Das oder die Rundfunksignale können von wenigstens einem Rundfunkempfangsgerät empfangen werden. Rundfunk ist in der Regel drahtlos und zeichnet sich dadurch aus, dass als Medium für die Rundfunksignale häufig elektromagnetische Wellen genutzt werden. Rundfunk kann beispielsweise aber auch ein Streaming über ein insbesondere digitales Kommunikationsnetzwerk umfassen, welches zumindest teilweise Funk zur Signalübertragung nutzt. Der Kommunikationskanal ist daher zumindest teilweise drahtlos realisiert.

Der Kommunikationskanal ist vorzugsweise zur drahtlosen Kommunikation ausgebildet und basiert vorzugsweise auf einer Funkübertragung, beispielsweise unter Nutzung von elektromagnetischen Wellen. Der Kommunikationskanal kann beispielsweise ein Funkkanal für eine Rundfunkübertragung sein. Der Kommunikationskanal kann aber zumindest teilweise auch ein digitaler Kommunikationskanal sein, beispielsweise eines drahtlosen Kommunikationsnetzwerkes wie GSM, UMTS, LTE und/oder dergleichen. Derartige Kommunikationskanäle ermöglichen zwar grundsätzlich eine bidirektionale Kommunikation, jedoch werden diese Kommunikationskanäle im Sinne der Erfindung für die Übertragung der Stationssignale überwiegend lediglich unidirektional genutzt. Eine derartige Nutzung kann daher zum Beispiel auch ein "Streaming" des Stationssignals sein.

Das Stationssignal beziehungsweise Rundfunkstationssignal ist vorzugsweise ein Informationssignal und kann beispielsweise ein Videosignal, ein Audiosignal, ein Datensignal, Kombinationen hiervon oder dergleichen sein. Das Stationssignal wird von der Sendestation über einen jeweiligen Kommunikationskanal bereitgestellt.

Die Sendestation, insbesondere auch der Rundfunksender, sind in der Regel ortsfest beziehungsweise stationär angeordnete Vorrichtungen. Vereinzelt können sie aber auch mobil sein.

Es kann vorgesehen sein, dass die Sendestation für das von ihr ausgesendete Stationssignal eine Quellencodierung und/oder eine Quellenmodulation vorsieht, die eine weitgehend vollständige und zuverlässige Informationsrekonstruktion beziehungsweise Datenrekonstruktion durch das Funkempfangsgerät erlaubt. Hierfür kann das Funkempfangsgerät mit geeigneten Quellendecodier- und/oder Quellendemodulationseinheiten ausgerüstet sein.

Darüber hinaus kann vorgesehen sein, dass das von der Sendestation ausgesendete Stationssignal mit einer sendestationsspezifischen Modulation und/oder mit einer Kanalcodierung versehen wird. Dadurch kann eine zuverlässige und störsichere Übertragung des Stationssignals von der Sendestation zum Funkempfangsgerät erreicht werden. Entsprechend kann das Funkempfangsgerät hierfür geeignete Einheiten, beispielsweise eine Kanaldecodierungseinheit und/oder eine an die Modulation der Sendestation angepasste Demodulatoreinheit umfassen. Modulationsverfahren können beispielsweise Amplitudenmodulation, Frequenzmodulation, Phasenmodulation, Amplitudenquadraturmodulation, Kombinationen hiervon oder dergleichen sein.

Das Funkempfangsgerät erfasst für den ersten Aspekt Kommunikationskanäle, in denen beispielsweise das ausgewählte der Stationssignale übermittelt wird. Das Funkempfangsgerät kann jedoch auch ergänzend oder alternativ die Kommunikationskanäle ermitteln, die Stationssignale von Sendestationen übermitteln, die nicht das ausgewählte der Stationssignale sind. Dadurch besteht die Möglichkeit, nicht nur die Kommunikationskanäle für das ausgewählte der Stationssignale zu ermitteln, sondern - je nach Bedarf - auch die Kommunikationskanäle zu ermitteln, über die die Stationssignale von anderen Sendestationen als der ausgewählten der Sendestation übermittelt werden. Dadurch ist es möglich, die Empfangseigenschaften für eine Vielzahl der ermittelten Kommunikationskanäle zu erfassen und verfügbar zu machen.

Zu diesem Zweck ist vorgesehen, dass das Funkempfangsgerät Positionsdaten erfasst, und zwar vorzugsweise Positionsdaten zu dessen eigener, insbesondere aktueller Position. Zu diesem Zweck kann das Funkempfangsgerät eine GPS-Einheit oder dergleichen umfassen. Darüber hinaus kann insbesondere bei Anordnen des Funkempfangsgeräts in einem Kraftfahrzeug vorgesehen sein, dass das Funkempfangsgerät in Kommunikationsverbindung mit einem Navigationsgerät des Kraftfahrzeugs steht und von diesem aktuelle Positionsdaten erhält. Diese Positionsdaten, die der Position des Funkempfangsgeräts bei dem Erfassen der Empfangseigenschaften für die ermittelten Kommunikationskanäle entsprechen, werden zu den bezüglich der ermittelten Kommunikationskanäle erfassten Empfangseigenschaften zugeordnet, sodass für wenigstens eines der Stationssignale ein positionsbezogener Empfangsdatensatz ermittelt wird. Der Empfangsdatensatz umfasst also zumindest die Positionsdaten sowie die Empfangseigenschaften, die das Funkempfangsgerät an der Position gemäß der Positionsdaten erfasst hat.

Der positionsbezogene Empfangsdatensatz kann zu diesem Zweck für ein jeweiliges der Stationssignale ermittelt worden sein, und wenigstens einen Kommunikationskanal umfassen. Natürlich kann der Empfangsdatensatz auch mehrere Kommunikationskanäle für das gleiche Stationssignal umfassen. Darüber hinaus ist es natürlich möglich, einen positionsbezogenen Empfangsdatensatz für einen jeweiligen der ermittelten Kommunikationskanäle individuell bereitzustellen. Vorzugsweise umfasst ein jeweiliger Empfangsdatensatz auch Daten bezüglich des Stationssignals, welches über den jeweiligen Kommunikationskanal übermittelt wird.

Die auf diese Weise ermittelten positionsspezifischen Empfangsdatensätze werden dann an die Servervorrichtung übermittelt. Dort werden sie zumindest abrufbar gespeichert. Zu diesem Zweck kann die Servervorrichtung eine oder mehrere Speichereinheiten umfassen. Die Servervorrichtung kann eine zentrale Servervorrichtung sein. In alternativen Ausgestaltungen kann sie jedoch auch über eine Mehrzahl von Standorten verteilt angeordnet sein, zu welchem Zweck die Servervorrichtung einzelne Servereinheiten an den jeweiligen Standorten umfassen kann, die untereinander in Kommunikationsverbindung stehen.

Die Servervorrichtung kann darüber hinaus auch eine Rechnereinheit umfassen, die es erlaubt, die positionsbezogenen Empfangsdatensätze auszuwerten, um zum Beispiel für vorgegebene Positionsdaten den Kommunikationskanal zu ermitteln, der die günstigsten Empfangseigenschaften eines Stationssignals für ein an den Positionsdaten positioniertes Funkempfangsgerät angibt. Die günstigsten Empfangseigenschaften können beispielsweise eine Empfangsfeldstärke, eine Datenrate, einen Modulationsgrad und/oder dergleichen umfassen. Darüber hinaus können natürlich auch störende Effekte wie beispielsweise Störsender oder dergleichen berücksichtigt werden. Die Rechnereinheit ermöglicht es, mittels eines geeigneten Rechnerprogramms eine Auswahlfunktionalität für ein Stationssignal an einer bestimmten Position eines jeweiligen Funkempfangsgeräts zu ermitteln. Dem auf diese Weise ermittelte günstigste Kommunikationskanal können dann zum Beispiel Identifikationsdaten zu geordnet werden, die es erlauben, den Kommunikationskanal durch das Empfangsgerät zu identifizieren. Dadurch ist es dem Funkempfangsgerät möglich, anhand der Identifikationsdaten den entsprechenden Kommunikationskanal einzustellen.

Das Funkempfangsgerät kann Kommunikationskanäle erfassen, in denen das Stationssignal der ausgewählten Sendestation mittels jeweils eines eigenen Kommunikationskanals übermittelt wird. Hierzu kann beispielsweise ein gesamter Empfangsbereich des Funkempfangsgeräts bezüglich der insgesamt verfügbaren Kommunikationskanäle abgetastet werden. Mit der Abtastung kann festgestellt werden, welche Kommunikationskanäle ein für das Stationssignal empfangbares Signal enthalten. Auf diese Weise können die Kommunikationskanäle erfasst werden, die zunächst überhaupt irgendwelche empfangbaren Stationssignale übermitteln. Die empfangenen Stationssignale können sodann hinsichtlich kanalspezifischer Parameter analysiert werden. Kanalspezifische Parameter können beispielsweise eine gewählte Kanalcodierung, eine gewählte Modulation, eine Empfangsfeldstärke, eine Empfangsart, eine Kennung der Sendestation, deren Stationssignal mittels der Kommunikationskanals übermittelt wird, Kombinationen hiervon und/oder dergleichen sein. Auf diese Weise kann das Funkempfangsgerät feststellen, über welche Kommunikationskanäle welche Stationssignale, insbesondere das ausgewählte Stationssignal, empfangen werden können.

Die kanalspezifischen Parameter können für mehrere oder auch alle Kommunikationskanäle gleich sein. Üblicherweise sind sie jedoch abhängig von der Art des Kommunikationskanals, beispielsweise davon, ob der Kommunikationskanal ein Funkkanal ist, der zum Aussenden von Rundfunk in einem UKW-Bereich vorgesehen ist, oder davon, ob der Kommunikationskanal durch ein Mobilfunknetzwerk bereitgestellt ist, oder dergleichen. Die Stationssignale der Kommunikationskanäle, vorzugsweise der festgestellten Kommunikationskanäle, die das Stationssignal der ausgewählten Sendestation übermitteln, werden unter Berücksichtigung der jeweils kanalspezifischen Parameter behandelt, indem beispielsweise eine geeignete Demodulation und/oder Decodierung vorgenommen wird. Dadurch ist es möglich, das Stationssignal empfangsseitig entsprechend bereitzustellen. Vorzugsweise erfolgt dies kanalselektiv, das heißt, die Behandlung erfolgt unabhängig von den anderen Kommunikationskanälen.

Bei den Kommunikationskanälen handelt es sich vorzugsweise um zumindest teilweise drahtlose Kommunikationskanäle, die zumindest teilweise auf der Nutzung von Funk basieren.

Die Sendestation ist eine Einrichtung, die Informationen beziehungsweise Daten, beispielsweise nach Art von Rundfunk, verbreitet. Zu diesem Zweck wird ein jeweiliges Stationssignal einer jeweiligen Sendestation entsprechend eines Kommunikationskanals, über den das Kommunikationskanal übermittelt werden soll, behandelt, beispielsweise in dem es einer Modulation und/oder einer Codierung unterzogen wird. Darüber hinaus können natürlich auch weitere Behandlungen vorgesehen sein, die die Qualität des Stationssignals verbessern können, insbesondere auch empfangsseitig. Zu diesem Zweck können Fehler korrigierende Codierungen oder dergleichen zum Einsatz kommen.

Das Ermitteln der Kommunikationskanäle für ein jeweiliges der Stationssignale kann durch entsprechendes Scannen der Kommunikationskanäle, die mittels des Funkempfangsgeräts empfangbar sind, erfolgen. Das Ermitteln kann auf das ausgewählte der Stationssignale begrenzt sein. Darüber hinaus besteht natürlich auch die Möglichkeit, dass neben dem ausgewählten Stationssignal das Ermitteln auch nicht ausgewählte Stationssignale umfasst. Schließlich kann auch vorgesehen sein, dass das Ermitteln lediglich nicht ausgewählte Stationssignale umfasst. Je nach Bedarf kann dies auch durch eine Auswahl von Stationssignalen, die beispielsweise ein Nutzer des Funkempfangsgeräts vornehmen kann oder dergleichen, vorgesehen sein.

Das Scannen der Kommunikationskanäle braucht nicht auf eine bestimmte Arte von Kommunikationskanälen, beispielsweise Rundfunkkanäle, beschränkt zu sein. Es können nämlich auch weitere Kommunikationskanäle beim Scannen erfasst werden, über die ein jeweiliges der Stationssignale empfangen werden kann, beispielsweise über ein Mobilfunknetzwerk oder ein vergleichbares Kommunikationsnetzwerk.

Für die auf diese Weise ermittelten Kommunikationskanäle werden sodann die Empfangseigenschaften ermittelt. Die Empfangseigenschaften können eine Modulationsart, eine Codierung, ein Modulationsgrad, eine Empfangssignalstärke, einen normierten Lautstärkewert, einen Wert für eine Empfangsqualität und/oder dergleichen umfassen. Darüber hinaus können die Empfangseigenschaften auch Qualitätsdaten bezüglich des Kommunikationskanals umfassen, beispielsweise ob der Kommunikationskanal gestört ist oder dergleichen. Die Empfangseigenschaften können unter anderem vom Funkempfangsgerät genutzt werden, um das ausgewählte der Stationssignale mit möglichst großer Qualität empfangen und ausgeben zu können.

Die Ausgabe des Stationssignals durch das Funkempfangsgerät kann durch ein elektrisches Signal gegeben sein, welches einem Wiedergabegerät zur Wiedergabe der Daten beziehungsweise der Informationen dient. Beispielsweise kann das Wiedergabegerät ein Verstärker oder auch ein Fernsehgerät sein. Es kann aber auch vorgesehen sein, dass das Funkempfangsgerät selbst das ausgewählte der Stationssignale für einen Nutzer ausgibt, beispielsweise akustisch, visuell oder dergleichen. Zu diesem Zweck kann das Funkempfangsgerät geeignete Ausgabeeinheiten umfassen.

Gemäß dem ersten Aspekt werden Positionsdaten des Funkempfangsgeräts erfasst. Zu diesem Zweck kann vorgesehen sein, dass Positionsdaten durch einen Nutzer in das Funkempfangsgerät eingegeben werden können. Es kann darüber hinaus auch vorgesehen sein, dass das Funkempfangsgerät selbst eine Ortungseinheit aufweist, beispielsweise basierend auf der Nutzung von GPS oder dergleichen, um selbst bedarfsweise die Positionsdaten des Funkempfangsgeräts ermitteln zu können. Darüber hinaus besteht natürlich insbesondere bei einer Anordnung des Funkempfangsgeräts in einem Kraftfahrzeug die Möglichkeit, das Funkempfangsgerät mit weiteren Einrichtungen des Kraftfahrzeugs zu koppeln, die eine entsprechende Ortungsfunktion bereitstellen können, beispielsweise ein Navigationsgerät oder dergleichen.

Das Funkempfangsgerät weist eine Steuereinheit beziehungsweise eine Auswerteeinheit auf, die die erfassten Positionsdaten des Funkempfangsgeräts zu den bezüglich der ermittelten Kommunikationskanäle erfassten Empfangseigenschaften zuordnet. Dadurch können positionsbezogene Empfangsdatensätze ermittelt werden, die beispielsweise für einen jeden der Kommunikationskanäle separat ermittelt werden können. Es kann aber auch vorgesehen sein, dass die Empfangsdatensätze zumindest teilweise stationssignalspezifisch oder sogar sendestationsspezifisch ermittelt werden. Entsprechend kann der positionsbezogene Empfangsdatensatz eine jeweilige zusätzliche Information enthalten.

Die auf diese Weise ermittelten positionsbezogenen Empfangsdatensätze werden sodann an eine Servervorrichtung übermittelt, um diese durch die Servervorrichtung abrufbar zu speichern. Dadurch können die Empfangsdatensätze für eine Vielzahl von Nutzern beziehungsweise Funkempfangsgeräten verfügbar gemacht werden, sodass ein Empfang eines Stationssignals an einer jeweiligen Position eines jeweiligen Funkempfangsgeräts verbessert werden kann.

Das Übermitteln kann kontinuierlich oder auch zu vorgegebenen Zeitpunkten erfolgen. Beispielsweise kann das Übermitteln dann erfolgen, wenn eine insbesondere bidirektionale Kommunikationsverbindung zwischen dem Funkempfangsgerät und der Servervorrichtung besteht. Diese braucht nicht dauerhaft vorzuliegen, sondern sie kann beispielsweise bei mobilen Funkempfangsgeräten lediglich zeitweise vorhanden sein. In der Zwischenzeit können die positionsbezogenen Empfangsdatensätze, die das Funkempfangsgerät ermittelt hat, zwischengespeichert werden, bis sie an die Servervorrichtung übermittelt werden können. Grundsätzlich besteht natürlich die Möglichkeit, jeden der ermittelten positionsbezogenen Empfangsdatensätze auch durch das Funkempfangsgerät selbst zu speichern. Dadurch stehen die entsprechenden Empfangsdatensätze im Funkempfangsgerät selbst unmittelbar zur Verfügung. Jedoch ist die Verfügbarkeit für andere Funkempfangsgeräte dadurch begrenzt.

Die Servervorrichtung kann eine Rechnereinheit sein, die eine Speichereinheit umfasst, die beispielsweise eine oder mehrere Festplatten oder dergleichen umfassen kann. Die Servervorrichtung kann an einer zentralen Stelle angeordnet sein und beispielsweise über ein Kommunikationsnetzwerk wie dem Internet oder dergleichen kommunikationstechnisch erreichbar sein. Beispielsweise kann vorgesehen sein, das das Funkempfangsgerät zumindest zeitweise über eine drahtlose Funkverbindung wie WLAN oder dergleichen und dem Internet mit der Servervorrichtung in Kommunikationsverbindung gebracht werden kann. Die Servervorrichtung kann jedoch auch räumlich verteilt angeordnet sein und zwei oder mehrere Rechnereinrichtungen mit entsprechenden Speichereinheiten umfassen, die kommunikationstechnisch miteinander gekoppelt sind, beispielsweise über ein Kommunikationsnetzwerk wie dem Internet oder dergleichen.

Gemäß einer vorteilhaften Weiterbildung wird vorgeschlagen, dass zumindest das Erfassen der Empfangseigenschaften der ermittelten Kommunikationskanäle und der Positionsdaten des Funkempfangsgeräts zu wenigstens einem vorgegebenen Zeitpunkt erfolgt. Hierdurch ist es möglich, die Positionsdaten bezüglich der ermittelten Empfangseigenschaften auf einfache Weise eindeutig zuzuordnen, insbesondere wenn das Funkempfangsgerät mobil angeordnet ist, beispielsweise in einem Kraftfahrzeug oder dergleichen. Dadurch kann eine aktuelle Position des Funkempfangsgeräts den aktuell erfassten Empfangsdaten zugeordnet werden. Natürlich kann vorgesehen sein, dass die Empfangsdaten sowie auch die Positionsdaten kontinuierlich ermittelt und zugeordnet werden. Dadurch kann ein Empfangsprofil in Bezug auf die Positionsdaten ermittelt werden, das es ermöglicht, auch bei sich räumlich in kurzen Abständen stark ändernden Empfangseigenschaften eine gute Auflösung zu erzielen, die es ermöglicht, Funkempfangsgeräten abhängig von ihrer Eigenbewegung ein gezieltes Einstellen auf jeweilige von den Positionsdaten abhängige Empfangskanäle zu ermöglichen beziehungsweise zu prognostizieren, sodass der Empfang des ausgewählten Stationssignals auch während einer Bewegung des Funkempfangsgeräts deutlich verbessert werden kann. Diese Eigenschaft eignet sich insbesondere in einem gebirgigen Gelände, bei dem das Funkempfangsgerät mitgeführt wird oder auch im städtischen Bereich, insbesondere bei einer Bebauung mit Hochhäusern, weil hier der Empfang drahtloser Kommunikationskanäle durch die geografischen Randbedingungen stark beeinflusst sein kann.

Darüber hinaus wird vorgeschlagen, dass die Positionsdaten des Funkempfangsgeräts zu wenigstens einem vorgegebenen Zeitpunkt erneut ermittelt werden und das Verfahren bei veränderten Positionsdaten des Funkempfangsgeräts wiederholt wird. Dadurch ist es möglich, dass das Funkempfangsgerät ermittelt, dass es bewegt worden ist, wodurch das Funkempfangsgerät die Empfangseigenschaften der Kommunikationskanäle erneut erfasst und den neuen Positionsdaten zuordnet. Natürlich kann vorgesehen sein, dass nicht nur ein vorgegebener Zeitpunkt vorgesehen ist, um die Positionsdaten des Funkempfangsgeräts erneut zu ermitteln. Vielmehr kann vorgesehen sein, dass eine Vielzahl von Zeitpunkten vorgegeben wird, beispielsweise äquidistant beabstandete Zeitpunkte oder dergleichen. Darüber hinaus besteht natürlich die Möglichkeit, dass die vorgegebenen Zeitpunkte abhängig von der Bewegung des Funkempfangsgeräts gewählt werden, beispielsweise indem bei einer großen Geschwindigkeit des Funkempfangsgeräts die Zeitpunkte zeitlich kürzer aufeinanderfolgend vorgegeben werden, wohingegen bei einer kleinen Geschwindigkeit des Funkempfangsgeräts ein entsprechend größerer zeitlicher Abstand zwischen den vorgegebenen Zeitpunkten gewählt sein kann. Zu diesem Zweck kann das Funkempfangsgerät die Positionsdaten vorzugsweise kontinuierlich erfassen und hieraus die Bewegung des Funkempfangsgeräts ermitteln. Dies kann durch die Steuereinheit des Funkempfangsgeräts beziehungsweise auch die Auswerteeinheit realisiert sein.

Die Steuereinheit beziehungsweise die Auswerteeinheit des Funkempfangsgeräts ist vorzugsweise eine elektronische Hardwareschaltung, die eine programmgesteuerte Rechnereinheit umfassen kann, oder durch diese sogar gebildet sein kann. Die Hardwareschaltung beziehungsweise die Rechnereinheit sind ausgebildet, die gewünschte Funktionalität des Funkempfangsgeräts bereitzustellen, um die Funktion der Erfindung realisieren zu können. Ist eine Rechnereinheit vorhanden, kann vorgesehen sein, dass die Funktion zumindest teilweise durch ein geeignetes Rechnerprogramm realisiert wird, welches durch die Rechnereinheit ausgeführt wird.

In Bezug auf den zweiten Aspekt zum Betreiben des Funkempfangsgeräts ist vorgesehen, dass das Funkempfangsgerät Positionsdaten ermittelt. Diese Positionsdaten sowie Daten zum ausgewählten der Stationssignale werden an eine Servervorrichtung übermittelt, die - wie oben erläutert - positionsbezogene Empfangsdatensätze abrufbar speichert. Die Servervorrichtung ist ausgebildet, die Positionsdaten sowie die Daten zum ausgewählten der Stationssignale auszuwerten und zum Beispiel den Kommunikationskanal mit den günstigsten Empfangseigenschaften für das Funkempfangsgerät an seiner übermittelten Position zu ermitteln. Natürlich kann auch vorgesehen sein, dass die Servervorrichtung lediglich einen entsprechenden positionsbezogenen Empfangsdatensatz aus den gespeicherten Datensätzen ermittelt.

Zu diesem Zweck umfasst die Servervorrichtung beispielsweise eine Auswerteeinheit, die eine Hardwareschaltung und/oder eine Rechnereinheit umfassen kann, um die gewünschte Funktionalität zu ermitteln. Die günstigsten Empfangseigenschaften können beispielsweise die größte Empfangssignalstärke, der größte normierte Lautstärkewert, der größte Modulationsgrad oder auch die geringsten Störungen des jeweiligen Kommunikationskanals sein. Natürlich kann auch eine Kombination hiervon vorgesehen sein. Die Auswerteeinheit der Servervorrichtung ermittelt zum Beispiel anhand von vorgebbaren beziehungsweise gewichteten Empfangseigenschaften den günstigsten Kommunikationskanal für den Empfang des ausgewählten Stationssignals. Die Auswerteeinheit der Servervorrichtung kann dem auf diese Weise ermittelten Kommunikationskanal Identifikationsdaten zuordnen, die es dem Funkempfangsgerät erlauben, den ermittelten Kommunikationskanal zu identifizieren und einzustellen. Die Identifikationsdaten werden von der Servervorrichtung an das Funkempfangsgerät übermittelt. Alternativ kann auch der ermittelte positionsbezogene Empfangsdatensatz an das Funkempfangsgerät übermittelt werden. Das Funkempfangsgerät empfängt die Identifikationsdaten und stellt dann für den Empfang des ausgewählten der Stationssignale diesen Kommunikationskanal anhand der Identifikationsdaten oder des empfangenen positionsbezogenen Empfangsdatensatzes ein. Das Übermitteln der Identifikationsdaten kann auf gleiche Weise erfolgen, wie das Übermitteln der Positionsdaten und der Daten zum ausgewählten der Stationssignale an die Servervorrichtung erfolgt ist, beispielsweise über eine bidirektionale Kommunikationsverbindung wie ein Mobilfunknetzwerk oder dergleichen.

Vorzugsweise wird vorgeschlagen, dass das Funkempfangsgerät an einem Kraftfahrzeug angeordnet ist, wobei das Kraftfahrzeug gemäß einem durch ein Navigationsgerät vorgegebenen Fahrweg geführt wird und wobei die Positionsdaten des Funkempfangsgeräts anhand des vorgegebenen Fahrwegs ermittelt werden. Bei dieser Weiterbildung ist vorgesehen, dass das Funkempfangsgerät nicht nur Positionsdaten in Bezug auf seine aktuelle Position an die Servervorrichtung übermitteln kann, sondern es kann auch für zukünftige weitere Positionen Positionsdaten an die Servervorrichtung übermitteln. Dadurch ist es möglich, von der Servervorrichtung für zumindest einen Teil des vorgegebenen Fahrwegs im Vorfeld bereits entsprechende Identifikationsdaten oder positionsbezogene Empfangsdatensätze zu erhalten und verfügbar zu halten, sodass abhängig von einer jeweils erreichten Position des Kraftfahrzeugs beziehungsweise des Funkempfangsgeräts die entsprechenden Identifikationsdaten oder positionsbezogenen Empfangsdatensätze aktiviert werden können, sodass zum Beispiel der entsprechend günstigste Kommunikationskanal für die jeweils erreichte Position genutzt werden kann. Dadurch kann der Empfang des ausgewählten Stationssignals deutlich verbessert werden.

Die Servervorrichtung kann dazu ausgebildet sein, die von den Funkempfangsgeräten übermittelten positionsbezogenen Empfangsdatensätze zu empfangen und zu speichern. Das speichern kann derart erfolgen, dass die positionsbezogenen Empfangsdatensätze zumindest teilweise von den Funkempfangsgeräten von der Servervorrichtung abgerufen werden können. Zu diesem Zweck empfängt die Servervorrichtung zumindest die Positionsdaten sowie Daten zum ausgewählten der Stationssignale von einem jeweiligen der Funkempfangsgeräte. Im einfachsten Fall kann dann durch die Steuereinheit der Servervorrichtung anhand der Positionsdaten ein geeigneter positionsbezogener Empfangsdatensatz in der Speichereinheit der Servervorrichtung gesucht werden und es können Identifikationsdaten zum günstigsten Kommunikationskanal anhand des positionsbezogenen Empfangsdatensatzes ermittelt und an das Funkempfangsgerät übermittelt werden. Die Identifikationsdaten können im einfachsten Fall die positionsbezogenen Empfangsdatensätze zu den ermittelten Positionsdaten und dem übermittelten ausgewählten Stationssignal sein.

Darüber hinaus ist es natürlich auch möglich, dass die Servervorrichtung mittels ihrer Steuereinheit beziehungsweise Auswerteeinheit eine Datenverarbeitung vornimmt. Dies ist insbesondere dann vorteilhaft, wenn zu Positionsdaten von unterschiedlichen Funkempfangsgeräten mehrere positionsbezogene Empfangsdatensätze übermittelt worden sind. Die Auswertung kann hier vorsehen, dass die Empfangseigenschaften, die zu den gleichen Positionsdaten von unterschiedlichen Funkempfangsgeräten zu gegebenenfalls auch unterschiedlichen Zeitpunkten ermittelt worden sind, weiterverarbeitet werden. Beispielsweise können die Empfangseigenschaften gemittelt werden, wenn sie voneinander abweichen. Darüber hinaus können auch weitere Verarbeitungen, insbesondere unter Nutzung von statistischen Auswertungsmethoden zum Einsatz kommen. Darüber hinaus kann natürlich auch vorgesehen sein, dass die Empfangseigenschaften abhängig von einem Zeitpunkt der Ermittlung gewichtet werden, um genauere Empfangsdaten ermitteln zu können. Eine weitere Verarbeitung kann vorgesehen sein.

Die Identifikationsdaten können beispielsweise einen Funkkanal bezeichnen, eine IP-Adresse bei Nutzung eines digitalen Mobilfunknetzwerks oder dergleichen. In diesem Fall braucht also das Funkempfangsgerät keine Signalverarbeitungskapazität zur Verfügung zu stellen, um den günstigsten der Kommunikationskanäle ermitteln zu können. Dies kann zentral durch die Servervorrichtung bereitgestellt sein.

Die für die erfindungsgemäßen Verfahren angegebenen Vorteile und Wirkungen gelten natürlich gleichermaßen auch für die erfindungsgemäßen Funkempfangsgeräte, die erfindungsgemäße Servervorrichtung sowie das erfindungsgemäße Kraftfahrzeug und umgekehrt. Daher können Verfahrensmerkmale auch als Vorrichtungsmerkmale oder umgekehrt formuliert sein.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Blockdarstellung eines Funkübertragungssystems mit einer Rundfunkstation, einem Rundfunksender, einer über ein Kommunikationsnetzwerk angeschlossenen Servervorrichtung, sowie zwei in nicht näher dargestellten Kraftfahrzeugen angeordnete Funkempfangsgeräte;
- Fig. 2: eine schematische Darstellung eines Kraftfahrzeugs, dessen Funkempfangsgerät ein Stationssignal einer Station A als ausgewähltes Stationssignal empfängt;
- Fig. 3: eine schematische Darstellung wie Fig. 2, bei der ein Stationssignal einer Station G von dem Funkempfangsgerät des Kraftfahrzeugs empfangen wird;
- Fig. 4: eine schematische Darstellung wie Fig. 2, bei der das Funkempfangsgerät des Kraftfahrzeugs ein Stationssignal einer Station C empfängt;
- Fig. 5: eine schematische Darstellung basierend auf den Fig. 2 bis 4, wobei die Funkempfangsgeräte der Kraftfahrzeuge positionsbezogene Empfangsdatensätze an eine Servervorrichtung übermitteln;
- Fig. 6: eine schematische Blockdarstellung zum Ermitteln von normierten Lautstärkewerten durch das Funkempfangsgerät;
- Fig. 7: eine schematische Diagrammdarstellung von über unterschiedliche Empfangskanäle empfangenen Lautstärkewerten eines ausgewählten Stationssignals; und
- Fig. 8: eine schematische Diagrammdarstellung einer Zuordnung von Anpassungswerten basierend auf Fig. 7.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

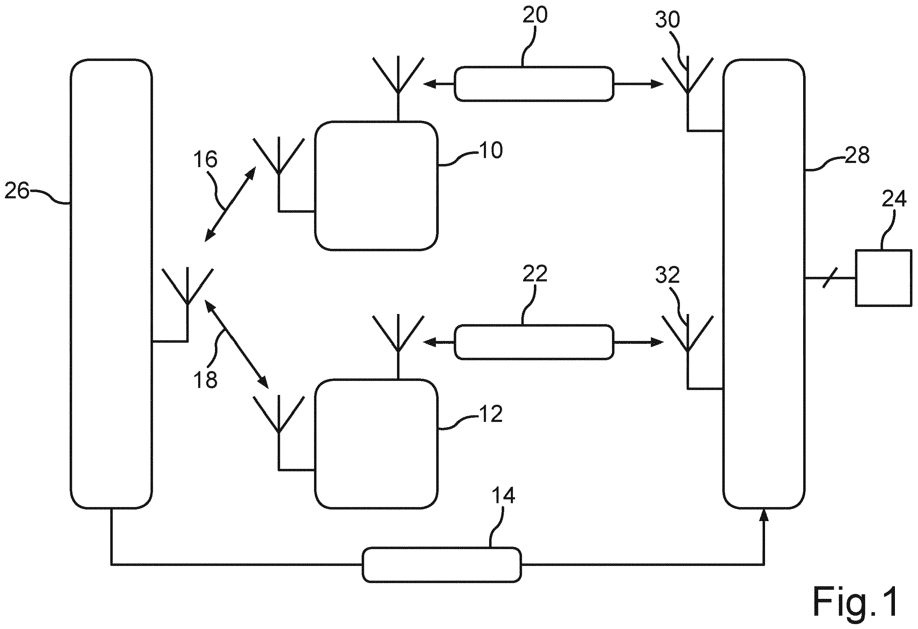

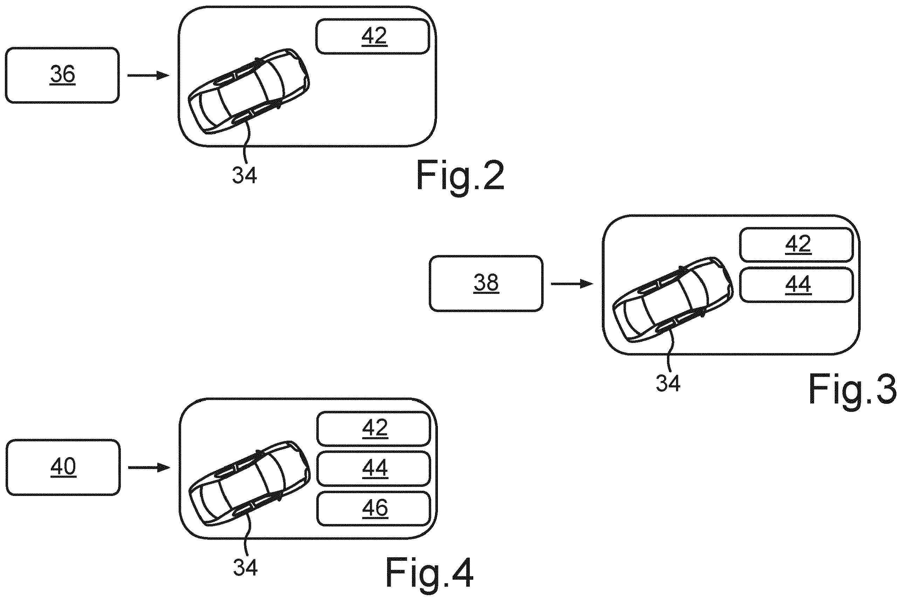

Fig. 1 zeigt in einer schematischen Blockdarstellung eine allgemeine Architektur zur Verbesserung eines Empfangs von über Kommunikationskanälen 16, 18, 20, 22 übertragenen Stationssignalen 36, 38, 40 (Fig. 2 bis 4) von Sendestationen von denen eine mit dem Bezugszeichen 14 exemplarisch in Fig. 1 dargestellt ist. Die Übertragung des Stationssignals der Sendestation 14 kann über einen mit der Sendestation 14 in Kommunikationsverbindung stehenden Stationssender 26 erfolgen, beispielsweise indem das Stationssignal nach Art von Rundfunk über Kommunikationskanäle 16, 18 nach Art von Rundfunkkanälen ausgesendet wird. Eine derartige Aussendung von Rundfunk erfolgt häufig in einem UKW-Bereich. Die Kommunikationskanäle 16, 18 sind in diesem Fall durch Funkkanäle gebildet, die durch entsprechende Frequenzbänder definiert sind. Die Übertragung des Stationssignals über Rundfunk ist jedoch nicht auf UKW (Ultrakurzwelle) beschränkt, sondern sie kann natürlich auch in anderen für Rundfunk geeigneten Bereichen erfolgen, beispielsweise Mittelwelle (MW), Kurzwelle (KW) und/oder dergleichen. Abhängig von Übertragungseigenschaften des jeweiligen Kommunikationskanals 16, 18, 20, 22 kann vorgesehen sein, dass eine entsprechende Modulation und/oder Codierung des Stationssignals genutzt wird, um die Zuverlässigkeit und/oder Qualität der Übertragung zu verbessern beziehungsweise zu ermöglichen.

Darüber hinaus kann das Stationssignal der Sendestation 14 auch nach Art von Streaming über ein digitales, zumindest teilweise drahtloses Netzwerk ausgesendet werden, beispielsweise unter Nutzung eines Mobilfunknetzwerks wie GSM und/oder dergleichen. Zu diesem Zweck kann auch die Nutzung eines Kommunikationsnetzwerks wie WLAN, insbesondere auch das Internet und/oder dergleichen berücksichtigt werden.

In der vorliegenden Ausgestaltung ist vorgesehen, dass die Kommunikationskanäle 20, 22 Kommunikationskanäle eines Mobilfunknetzes sind, über die ein Streaming des Stationssignals der Sendestation 14 realisiert werden kann. Zu diesem Zweck sind an geeigneten Stellen Sende-Empfangs-Stationen 30, 32 für GSM-Übertragung positioniert, die es erlauben, das in Kommunikationsreichweite befindliche Funkempfangsgeräte, wie vorliegend die Funkempfangsgeräte 10, 12, über die Kommunikationskanäle 20, 22 mit der jeweiligen Sende-Empfangs-Station 30, 32 in Kommunikationsverbindung treten können. Die Sende-Empfangs-Stationen 30, 32 sind vorliegend kommunikationstechnisch mit dem Internet 28 gekoppelt. Das Internet 28 ist gleichzeitig mit der Sendestation 14 kommunikationstechnisch gekoppelt. Hierdurch kann das Streaming des Stationssignals der Sendestation 14 realisiert werden.

In Fig. 1 ist nicht dargestellt, dass die Funkempfangsgeräte 10, 12 an jeweiligen Kraftfahrzeugen, wie dem Kraftfahrzeug 34, angeordnet sind (vergleiche Fig. 2 bis Fig. 5). Im vorliegenden Fall sind die Funkempfangsgeräte 10, 12 durch jeweilige Autoradios gebildet.

Jedes der Funkempfangsgeräte 10, 12 ist ausgebildet, Sendestationen über die Kommunikationskanäle wie die Kommunikationskanäle 16, 18, 20, 22 empfangen zu können. Zu diesem Zweck weist jedes der Funkempfangsgeräte 10, 12 jeweilige nicht dargestellte Empfangseinheiten auf. Darüber hinaus sind die Funkempfangsgeräte 10, 12 vorliegend derart ausgebildet, dass sie wenigstens Stationssignale über wenigstens zwei Funkkanäle im Wesentlichen zugleich empfangen können. Vorzugsweise ist vorgesehen, dass die wenigstens zwei Funkkanäle dazu dienen, ein ausgewähltes der Stationssignale zu empfangen und auszugeben. Die Ausgabe erfolgt vorliegend durch Bereitstellung eines elektrischen Signals zur Steuerung eines Audioverstärkers, der das entsprechende Stationssignal akustisch innerhalb des jeweiligen Kraftfahrzeugs 34 ausgibt.

In der vorliegenden Ausgestaltung ist vorgesehen, dass die Funkempfangsgeräte 10, 12 mit nicht näher dargestellten Navigationsgeräten der jeweiligen Kraftfahrzeuge 34 in Kommunikationsverbindung stehen und von diesen jeweilige Positionsdaten zu aktuellen Positionen der Kraftfahrzeuge 34 und somit auch der Funkempfangsgeräte 10, 12 übermitteln. Dadurch hat jedes der Funkempfangsgeräte 10, 12 Positionsdaten bezüglich einer jeweiligen aktuellen Position verfügbar. In alternativen Ausgestaltungen kann natürlich auch vorgesehen sein, dass ein jeweiliges der Funkempfangsgeräte 10, 12 eine Positionierungseinheit umfasst, die beispielsweise unter Nutzung von GNSS, insbesondere GPS oder dergleichen das Ermitteln der jeweiligen Positionsdaten ermöglicht. Natürlich können auch Kombinationen hiervon vorgesehen sein.

In der vorliegenden Ausgestaltung ist vorgesehen, dass die Funkempfangsgeräte 10, 12 die Kommunikationskanäle 16, 18, 20, 22 für ein jeweiliges der Stationssignale ermitteln, über die das jeweilige der Stationssignale übertragen wird. In der Ausgestaltung gemäß Fig. 2 ist lediglich eine einzige Sendestation 14 vorgesehen, die entsprechend ein einziges Stationssignal ausgibt. Es ist jedoch nicht hierauf beschränkt. Selbstverständlich können mehrere Sendestationen vorgesehen sein, die zumindest jeweils ein einziges Stationssignal aussenden. Darüber hinaus kann natürlich vorgesehen sein, dass eine Sendestation 14 nicht nur ein einziges Stationssignal aussendet, sondern zum Beispiel zwei oder drei Stationssignale oder sogar noch mehr Stationssignale. Beispielsweise kann der Südwestdeutsche Rundfunk (SWR) als Sendestation Stationssignale SWR1, SWR2, SWR3 sowie weitere aussenden.

Das Ermitteln der Kommunikationskanäle erfolgt vorzugsweise für ein ausgewähltes der Stationssignale der Sendestation 14. Die Erfindung ist jedoch nicht hierauf beschränkt. Es kann in alternativen Ausgestaltungen auch vorgesehen sein, dass das Ermitteln der Kommunikationskanäle auch für eines oder mehrere Stationssignale erfolgt, die nicht dem ausgewählten der Stationssignale entsprechen. Vorzugsweise sind dann die Funkempfangsgeräte 10, 12 entsprechend angepasst ausgebildet, sodass die gewünschte Funktionalität realisiert werden kann.

Für die ermittelten Kommunikationskanäle 16, 18, 20, 22 werden sodann von den Funkempfangsgeräten 10, 12 die entsprechenden Empfangseigenschaften erfasst. Die Empfangseigenschaften können zum Beispiel eine Empfangssignalstärke, einen Wert für die Empfangsqualität, eine Modulationsart und/oder eine Codierungsart umfassen. Vorzugsweise wird zumindest das ausgewählte der Stationssignale über zumindest zwei voneinander unterschiedliche Kommunikationskanäle empfangen, und zwar empfängt das Funkempfangsgerät 10 das ausgewählte Stationssignal über den Kommunikationskanal 16, welcher vorliegend ein Rundfunkkanal ist, und zugleich empfängt das Funkempfangsgerät 10 das gleiche Stationssignal über den Kommunikationskanal 20 nach Art von Streaming. Dagegen empfängt das Funkempfangsgerät 12 das ausgewählte Stationssignal über den Kommunikationskanal 18, der ebenfalls ein Rundfunkkanal ist, zugleich empfängt das Funkempfangsgerät 12 das gleiche Stationssignal über den Kommunikationskanal 22 ebenfalls nach Art von Streaming. Hierdurch ist es möglich, dass die Funkempfangsgeräte 10, 12 Differenzdaten bezüglich der jeweiligen ermittelten normierten Lautstärken und eines jeweiligen relativen Zeitversatzes der Stationssignale zueinander, welches über die jeweils zwei Kommunikationskanäle 16, 18, 20, 22 empfangen wird, ermittelt werden können. Zusammen mit den Positionsdaten werden positionsbezogene Empfangsdatensätze ermittelt.

Die auf diese Weise ermittelten positionsbezogenen Empfangsdatensätze werden über die jeweiligen Kommunikationskanäle 20, 22 sowie das Internet 28 an eine Servervorrichtung 24 übermittelt, die diese positionsbezogenen Empfangsdatensätze in einer Datenbank 52 abrufbar speichert. Dadurch können diese positionsbezogenen Empfangsdatensätze für eine Vielzahl von Nutzern beziehungsweise Funkempfangsgeräten 10, 12 zur Verfügung gestellt werden, um den Empfang eines jeweiligen der Stationssignals, insbesondere des ausgewählten der Stationssignale durch die Funkempfangsgeräte 12, 14 zu verbessern.

Im vorliegenden Fall ist vorgesehen, dass die Positionsdaten der Funkempfangsgeräte 10, 12 zu einem vorgegebenen Zeitpunkt erneut ermittelt werden und das Verfahren zum Ermitteln der positionsbezogenen Empfangsdatensätze bei veränderten Positionsdaten des Funkempfangsgeräts 10, 12 wiederholt wird. Dadurch ist es möglich, insbesondere wenn das Kraftfahrzeug 34 im bestimmungsgemäßen Fahrbetrieb ist, entlang der Fahrstrecke eine Vielzahl von positionsbezogenen Empfangsdatensätze durch die Funkempfangsgeräte 10, 12 zu ermitteln und an die Servervorrichtung 24 zu übermitteln. Durch den Betrieb des Kraftfahrzeugs 34 im Fahrbetrieb und gleichzeitige Nutzung des jeweiligen Funkempfangsgeräts 10, 12 können somit eine Vielzahl von Daten ermittelt werden, die dazu dienen können, weiteren Funkempfangsgeräten von Kraftfahrzeugen, die an den gleichen Positionen entlang bewegt werden, entsprechende positionsbezogenen Empfangsdatensätze zur Verfügung zu stellen, sodass der Empfang des jeweiligen Stationssignals verbessert werden kann.

Das jeweilige Funkempfangsgerät 10, 12 braucht also in diesem Fall nicht aufwändig die Empfangsdaten zu ermitteln und bei Bedarf durch Umschalten und/oder Überlagerung von Kommunikationskanälen die Ausgabe des jeweiligen Stationssignals zu verbessern, sondern das jeweilige der Funkempfangsgeräte 10, 12 kann durch Nutzung der positionsbezogenen Empfangsdatensätze, die durch die Servervorrichtung 24 bereitgestellt werden können, mit geringem Aufwand nahezu unverzüglich eine entsprechende Anpassung hinsichtlich des Empfangs vornehmen, sodass eine Reaktionszeit deutlich reduziert werden kann. Dadurch lässt sich die Ausgabe des Stationssignals verbessern.

Zur Nutzung der Daten der Servervorrichtung 24 können die Funkempfangsgeräte 10, 12 wie folgt betrieben werden. Das jeweilige der Funkempfangsgeräte 10, 12 empfängt ein ausgewähltes Stationssignal und gibt dieses aus. Positionsdaten des Funkempfangsgeräts 10, 12 werden ermittelt, wie zuvor erläutert, wobei die Positionsdaten sowie Daten zum ausgewählten der Stationssignale an die Servervorrichtung 24 übermittelt werden. Die Servervorrichtung 24 speichert abrufbar eine Mehrzahl von positionsbezogenen Empfangsdatensätzen. Als Reaktion auf die an die Servervorrichtung 24 übermittelten Daten wird anhand der Positionsdaten zumindest ein positionsbezogener Empfangsdatensatz für das ausgewählte der Stationssignale von der Servervorrichtung 24 ermittelt und an das Funkempfangsgerät 10, 12 ausgesendet.

Das Funkempfangsgerät 10, 12 empfängt den wenigstens einen positionsbezogenen Empfangsdatensatz und stellt sich auf den entsprechenden Kommunikationskanal anhand des empfangenen positionsbezogenen Empfangsdatensatzes ein. Vorzugsweise handelt es sich dabei um einen einzigen Kommunikationskanal. Es kann jedoch alternativ auch vorgesehen sein, dass der positionsbezogene Empfangsdatensatz vorsieht, dass zwei oder auch mehrere Kommunikationskanäle für den Empfang des ausgewählten Stationssignals genutzt werden können. Das Funkempfangsgerät 10, 12 kann dann einen oder mehrere der Kommunikationskanäle 16, 18, 20, 22 nutzen, um das Stationssignal empfangen und auszugeben. Dabei kann das Funkempfangsgerät 10, 12 vorsehen, dass durch Nutzung von Differenzdaten der positionsbezogenen Empfangsdatensätze entsprechende Anpassungen erfolgen, sodass ein Umschalten beziehungsweise Überlagern der Stationssignale, die über unterschiedliche Kommunikationskanäle übertragen werden, möglichst störungsfrei realisiert werden kann.

In einer alternativen Ausgestaltung kann natürlich auch vorgesehen sein, dass die Servervorrichtung 24 die Positionsdaten nutzt, um den günstigsten Kommunikationskanal für das ausgewählte Stationssignal zu ermitteln. Hierzu kann die Servervorrichtung 24 dann Identifikationsdaten ermitteln, die an das jeweilige Funkempfangsgerät 10, 24 übermittelt werden. Das Funkempfangsgerät 10, 12 kann dann anhand der Identifikationsdaten den entsprechenden Kommunikationskanal ermitteln und einstellen. Bei dieser Ausgestaltung der Erfindung ist also funkempfangsgerätseitig nur ein sehr geringer Aufwand erforderlich, sodass eine sehr schnelle, präzise Reaktion erreicht werden kann.

Die Servervorrichtung 24 ist dazu ausgebildet, die von den Funkempfangsgeräten 10, 12 übermittelten positionsbezogenen Empfangsdatensätze zu empfangen und abrufbar zu speichern. Empfängt die Servervorrichtung 24 Positionsdaten von dem Funkempfangsgerät 10, 12 sowie Daten bezüglich des ausgewählten Stationssignals, kann die Servervorrichtung 24 diesbezüglich einen positionsbezogenen Empfangsdatensatz aus den gespeicherten Empfangsdatensätzen ermitteln und diesen positionsbezogenen Empfangsdatensatz an das Funkempfangsgerät 10, 12 übermitteln. Alternativ kann auch vorgesehen sein, dass die Servervorrichtung 24 zu den Positionsdaten und den Daten zum ausgewählten der Stationssignale denjenigen der Kommunikationskanäle 16, 18, 20, 22 mit den günstigsten Empfangseigenschaften ermittelt und Identifikationsdaten zu diesem Kommunikationskanal an das Funkempfangsgerät 10, 12 übermittelt. Funkempfangsgerätseitig braucht dann lediglich der entsprechende Kommunikationskanal eingestellt zu werden.

Natürlich kann die Servervorrichtung 24 die empfangenen positionsbezogenen Empfangsdatensätze einfach speichern. Darüber hinaus kann jedoch vorgesehen sein, dass die Servervorrichtung 24 die positionsbezogenen Empfangsdatensätze weiter verarbeitet. Die Verarbeitung kann beispielsweise darin bestehen, dass zu gleichen Positionsdaten vorliegende Empfangsdatensätze aktualisiert werden, sodass zu den gleichen Positionsdaten und gleichen Stationssignalen jeweils immer nur ein einziger positionsbezogener Empfangsdatensatz in der Datenbank der Servervorrichtung 24 vorhanden ist. Darüber hinaus kann natürlich auch vorgesehen sein, dass die Servervorrichtung 24 eine Verarbeitungseinheit (nicht dargestellt) umfasst, die es erlaubt, für Positionsdaten und/oder Stationssignale, für die in der Datenbank kein positionsbezogener Empfangsdatensatz vorhanden ist, unter Nutzung statistischer Methoden und gegebenenfalls auch unter Berücksichtigung von geografischen Eigenschaften positionsbezogene Empfangsdatensätze selbst zu ermitteln und gegebenenfalls an das Funkempfangsgerät 10, 12 zu übermitteln. Diese Ausgestaltung hat den Vorteil, dass Lücken der Datenbank in Bezug auf die Positionsdaten und/oder die Stationssignale gefüllt werden können. Zu diesem Zweck kann die Verarbeitungseinheit eine entsprechende Signalverarbeitung durchführen.

Die Fig. 2 bis 4 zeigen beispielhaft, wie Empfangseigenschaften von Stationssignalen im Funkempfangsgerät 10, 12 des Kraftfahrzeugs 34 erfasst werden. In der vorliegenden Ausgestaltung beziehen sich die Fig. 2 bis 4 auf die Empfangseigenschaften von unterschiedlichen Stationssignalen 36, 38, 40, wie sie zum Beispiel an unterschiedlichen Tagen empfangen werden.

Fig. 2 zeigt das Kraftfahrzeug 34, in dem, in Fig. 2 nicht dargestellt, das Funkempfangsgerät 10 angeordnet ist. Das Funkempfangsgerät 10 empfängt über den Rundfunkkanal 16 das Stationssignal 36 der Sendestation 14, und erfasst einen normierten Lautstärkewert A. der normierte Lautstärkewert A wird in einer Speicherzelle 42 des Funkempfangsgeräts 10 gespeichert.

Fig. 3 zeigt nun in einer vergleichbaren Situation an einem folgenden Tag auf die Situation gemäß Fig. 2, dass das Funkempfangsgerät 10 nunmehr ein Stationssignal 38 empfängt. Auch dieses Stationssignal 38 wird über Rundfunk empfangen. In einer zweiten Speicherzelle 44 des Funkempfangsgeräts 10 wird ein entsprechend normierter Lautstärkewert G gespeichert.

An einem folgenden Tag wird gemäß Fig. 4 ein drittes Stationssignal 40 durch das Funkempfangsgerät 10 empfangen und ein normierter Lautstärkewert C in einer Speicherzelle 46 gespeichert.

Bei der Erfassung der normierten Lautstärkewerte A, G, C werden zugleich auch Positionsdaten gespeichert, sodass die Speicherzellen 42, 44, 46 positionsbezogene Empfangsdatensätze speichern. Diese werden, sobald das Funkempfangsgerät 10 über den Kommunikationskanal 20 mit dem Internet 28 und infolgedessen mit der Servervorrichtung 24 koppelbar ist, an die Servervorrichtung 24 übermittelt. Die Servervorrichtung 24 speichert dann diese Empfangsdatensätze.

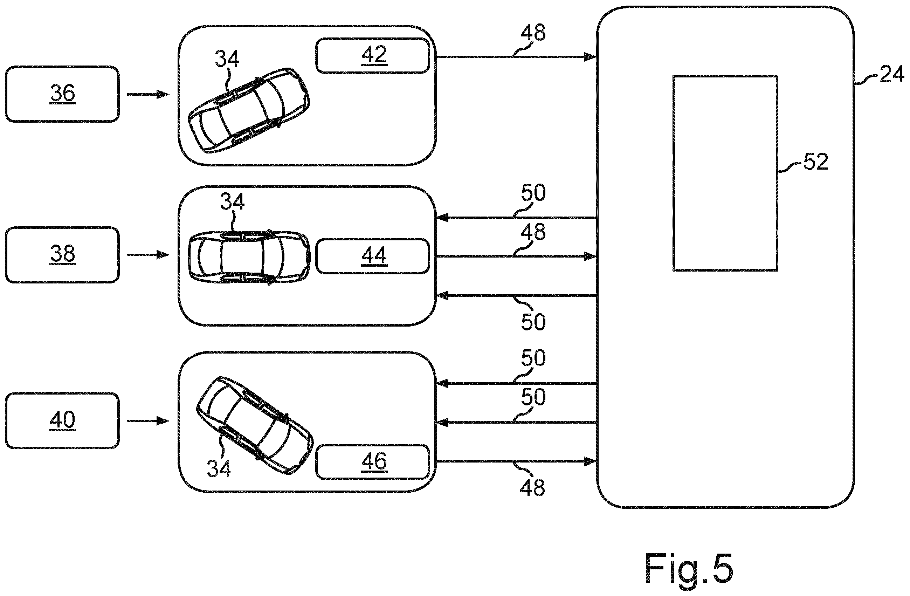

Fig. 5 zeigt einen entsprechenden Vorgang. Mit Pfeilen 48 ist eine Datenübermittlung vom Funkempfangsgerät 10 zur Servervorrichtung 24 dargestellt, wohingegen mit dem Pfeilen 50 entsprechende Datenübermittlungen von der Servervorrichtung 24 an das Funkempfangsgerät 10 dargestellt sind. Aus Fig. 5 ist ferner ersichtlich, dass die Servervorrichtung 24 eine Datenbank 52 umfasst, in der die positionsbezogenen Empfangsdatensätze gespeichert sind. Anstelle oder ergänzend zur normierten Lautstärke können auch Empfangsfeldstärken, relative zeitliche Versatze und/oder dergleichen ermittelt werden. Diese Daten können vom jeweiligen Empfangsdatensatz ebenfalls umfasst sein.

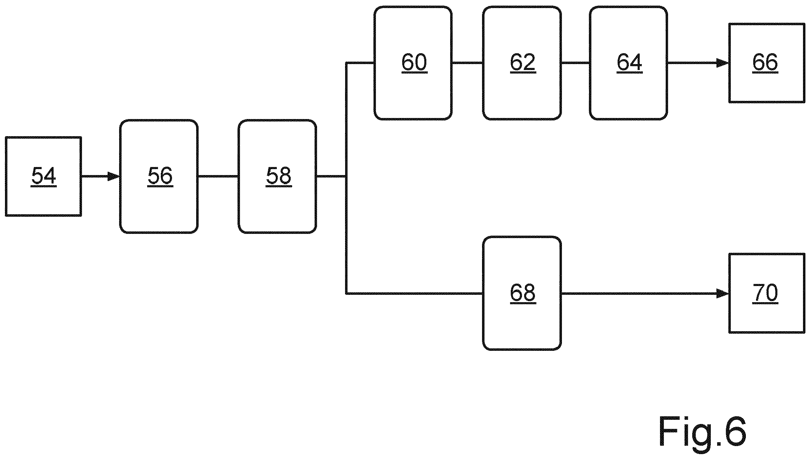

Fig. 6 zeigt in einer schematischen Blockdarstellung ein Beispiel, wie das Funkempfangsgerät 10, 12 normierte Lautstärkewerte ermittelt. Bei 54 wird das demodulierte und/oder decodierte Stationssignal, hier ein Audiosignal, eingegeben. Im Block 56 erfolgt eine Adaption einer Abtastrate. Die Signalverarbeitung wird dann im Block 58 fortgesetzt, der einen Audiofilter anwendet, beispielsweise gemäß ITU 1770.

Ab hier verzweigt sich die Signalverarbeitung in zwei parallele Zeige. In einem ersten Signalverarbeitungszweig erfolgt in einem Block 60 eine quadratische Mittelung auf Basis einer Zeitbasis von etwa 400 ms. In einem Block 62 werden dann die Signale für einen linken und einen rechten Kanal addiert. In einem darauffolgenden Block 64 erfolgt dann ein Ausblenden und/oder eine Langzeitmittelung über einen Zeitraum von vorliegend etwa 300 s. Schließlich wird in einem Block 66 ein mittlerer normierter Lautstärkepegel in vorgegebenen Einheiten LUFS (loudness unit full scale) ermittelt.

In einem zweiten parallelen Zweig erfolgt in einem Block 68 eine Spitzenpegelermittlung über einen langen Zeitraum von etwa 300 s. In einem darauffolgenden Block 70 wird dann ein normierter Lautstärkewert für den Spitzenpegel in der Einheit LUFS ermittelt. Diese Werte können dann durch den positionsbezogenen Empfangsdatensatz umfasst sein.

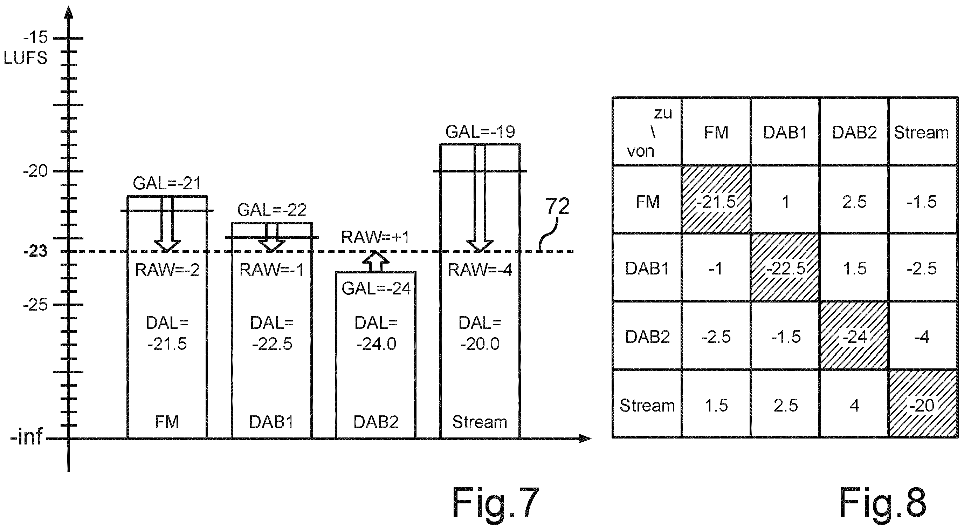

Fig. 7 zeigt in einer schematischen Diagrammdarstellung die Empfangssituation für das Stationssignal der Sendestation 14 über unterschiedliche Kommunikationskanäle, hier einen ersten Kommunikationskanal FM, einen zweiten Kommunikationskanal DAB1, einen dritten Kommunikationskanal DAB2 sowie einen vierten Kanal in Bezug auf Streaming. Die Ordinate ist im Lautstärkewert in der Einheit LUFS zugeordnet. Eine Linie 72 parallel zur Abszisse kennzeichnet einen Wert von -23 LUFS, der einen Zielwert für die weitere Signalverarbeitung betrifft. Mit den Graphen für FM, DAB1, DAB2 und Stream sind jeweiligen Lautstärkewerte der durch das Funkempfangsgerät 10 empfangenen Stationssignale dargestellt. Die Empfangslautstärkewerte (GAL; Englisch: guarded average volume level) gibt ein Maß an, mit welcher normierten Lautstärke das Stationssignal über den jeweiligen der Kommunikationskanäle empfangen wird. Mit dem Wert RAW wird die Abweichung in Bezug auf den Zielwert 72 angegeben.

Fig. 8 zeigt in einer schematischen Tabellendarstellung die entsprechenden Abweichungswerte in Bezug auf die Situation gemäß Fig. 7. In der linken Spalte in der Fig. 8 ist die Ausgangssituation der Einstellung des Funkempfangsgeräts 10 dargestellt. In der obersten Zeile ist die Zielsituation für die Einstellung des Funkempfangsgeräts 10 dargestellt. In den Feldern dazwischen werden entsprechende Einstellungsadaptionen angegeben. Die grau hinterlegten Felder in der von links oben nach rechts unten verlaufenden Diagonale der Tabelle geben die entsprechenden Empfangswerte an. Die weiteren Felder beziehen sich auf entsprechende Anpassungsfaktoren beim Wechseln zwischen den Kommunikationskanälen.

Aus den Fig. ist ersichtlich, wie auf einfache Weise eine Adaption vorgenommen werden kann. Die entsprechenden positionsbezogenen Empfangsdatensätze können an die Servervorrichtung 24 übermittelt werden. Es kann vorgesehen sein, dass die positionsbezogenen Empfangsdatensätze lediglich eine Tabelle, wie in Fig. 8 dargestellt, umfassen. Darüber hinaus kann natürlich auch vorgesehen sein, dass Empfangseigenschaften, wie sie mit Fig. 7 dargestellt sind, vom positionsbezogenen Empfangsdatensatz umfasst sind.

Die in den Fig. dargestellten Ausführungsbeispiele dienen ausschließlich der Erläuterung der Erfindung und sollen diese nicht beschränken.

## Patentansprüche

1. Verfahren zum Betreiben eines Funkempfangsgeräts (10, 12), das über Kommunikationskanäle (16, 18, 20, 22) übertragene Stationssignale von Sendestationen (14) empfängt und ein ausgewähltes der Stationssignale ausgibt, wobei das Verfahren die folgenden Schritte umfasst:
- Ermitteln der Kommunikationskanäle (16, 18, 20, 22) für ein jeweiliges der Stationssignale, über die das jeweilige der Stationssignale übertragen wird,
- Erfassen von Empfangseigenschaften für die ermittelten Kommunikationskanäle (16, 18, 20, 22),
- Erfassen von Positionsdaten des Funkempfangsgeräts (10, 12),
- Zuordnen der Positionsdaten zu den bezüglich der ermittelten Kommunikationskanäle (16, 18, 20, 22) erfassten Empfangseigenschaften, wobei für wenigstens eines der Stationssignale ein positionsbezogener Empfangsdatensatz ermittelt wird, und
- Übermitteln des wenigstens einen positionsbezogenen Empfangsdatensatzes an eine Servervorrichtung (24), um den wenigstens einen positionsbezogenen Empfangsdatensatz durch die Servervorrichtung (24) abrufbar zu speichern,
**dadurch gekennzeichnet, dass**
wenigstens eines der Stationssignale über wenigstens zwei voneinander unterschiedliche Kommunikationskanäle (16, 18, 20, 22) empfangen wird, Differenzdaten wenigstens bezüglich der jeweiligen normierten Lautstärken und eines jeweiligen relativen Zeitversatzes des Stationssignals ermittelt und durch den positionsbezogenen Empfangsdatensatz umfasst werden.

2. Verfahren nach Anspruch 1,
**dadurch gekennzeichnet, dass** zumindest das Erfassen der Empfangseigenschaften der ermittelten Kommunikationskanäle (16, 18, 20, 22) und der Positionsdaten des Funkempfangsgeräts zu wenigstens einem vorgegebenen Zeitpunkt erfolgt.

3. Verfahren nach einem der vorhergehenden Ansprüche,
**dadurch gekennzeichnet, dass** die Positionsdaten des Funkempfangsgeräts zu wenigstens einem vorgegebenen Zeitpunkt erneut ermittelt werden und das Verfahren bei veränderten Positionsdaten des Funkempfangsgeräts wiederholt wird.

4. Verfahren nach einem der vorhergehenden Ansprüche,
**dadurch gekennzeichnet, dass** die Empfangseigenschaften wenigstens eine Empfangssignalstärke, einen normierten Lautstärkewert, einen Wert für eine Empfangsqualität, eine Modulationsart und/oder eine Kodierungsart umfassen.

5. Verfahren zum Betreiben eines Funkempfangsgeräts (10, 12), das über Kommunikationskanäle (16, 18, 20, 22) übertragene Stationssignale von Sendestationen (14) empfängt und ein ausgewähltes der Stationssignale ausgibt, wobei das Verfahren die Schritte umfasst, dass Positionsdaten des Funkempfangsgeräts (10, 12) ermittelt werden, zumindest die Positionsdaten sowie Daten zum ausgewählten der Stationssignale an eine positionsbezogene Empfangsdatensätze abrufbar speichernde Servervorrichtung (24) übermittelt werden, als Reaktion auf die an die Servervorrichtung (24) übermittelten Daten anhand der Positionsdaten ein positionsbezogener Empfangsdatensatz für das ausgewählte der Stationssignale vom Funkempfangsgerät (10, 12) empfangen wird und das Funkempfangsgerät (10, 12) zum Empfangen und Ausgeben des ausgewählten der Stationssignale den Kommunikationskanal anhand des empfangenen positionsbezogenen Empfangsdatensatzes einstellt, **dadurch gekennzeichnet, dass** das ausgewählte der Stationssignale über wenigstens zwei voneinander unterschiedliche Kommunikationskanäle (16, 18, 20, 22) empfangen wird und Differenzdaten wenigstens bezüglich der jeweiligen normierten Lautstärken und eines jeweiligen relativen Zeitversatzes des Stationssignals, welche durch den positionsbezogenen Empfangsdatensatz umfasst werden, erhalten werden.

6. Verfahren nach Anspruch 5,
**dadurch gekennzeichnet, dass** das Funkempfangsgerät (10, 12) an einem Kraftfahrzeug angeordnet ist, wobei das Kraftfahrzeug gemäß einem durch ein Navigationsgerät vorgegebenen Fahrweg geführt wird und wobei die Positionsdaten des Funkempfangsgeräts (10, 12) anhand des vorgegebenen Fahrwegs ermittelt werden.

7. Funkempfangsgerät (10, 12), das ausgebildet ist, über Kommunikationskanäle (16, 18, 20, 22) übertragene Stationssignale von Sendestationen (14) zu empfangen und ein ausgewähltes der Stationssignale auszugeben, wobei das Funkempfangsgerät (10, 12) ferner ausgebildet ist:
- die Kommunikationskanäle (16, 18, 20, 22) für ein jeweiliges der Stationssignale, über die das jeweilige der Stationssignale übertragen wird, zu ermitteln,
- Empfangseigenschaften für die ermittelten Kommunikationskanäle (16, 18, 20, 22) zu erfassen,
das Funkempfangsgerät (10, 12) weiterhin ausgebildet ist,
- Positionsdaten des Funkempfangsgeräts (10, 12) zu erfassen,
- die Positionsdaten zu den bezüglich der ermittelten Kommunikationskanäle (16, 18, 20, 22) erfassten Empfangseigenschaften zuzuordnen, um für wenigstens eines der Stationssignale einen positionsbezogenen Empfangsdatensatz zu ermitteln, und
- den wenigstens einen positionsbezogenen Empfangsdatensatz an eine Servervorrichtung (24) zu übermitteln,
**dadurch gekennzeichnet, dass**
das Funkempfangsgerät (10, 12)_ausgebildet ist, wenigstens eines der Stationssignale über wenigstens zwei voneinander unterschiedliche Kommunikationskanäle (16, 18, 20, 22) zu empfangen, Differenzdaten wenigstens bezüglich der jeweiligen normierten Lautstärken und eines jeweiligen relativen Zeitversatzes des Stationssignals zu ermitteln und durch den positionsbezogenen Empfangsdatensatz zu umfassen.

8. Funkempfangsgerät (10, 12), das ausgebildet ist, über Kommunikationskanäle (16, 18, 20, 22) übertragene Stationssignale von Sendestationen (14) zu empfangen und ein ausgewähltes der Stationssignale auszugeben, wobei das Funkempfangsgerät (10, 12) ferner ausgebildet ist, Positionsdaten des Funkempfangsgeräts (10, 12) zu ermitteln, zumindest die Positionsdaten sowie Daten zum ausgewählten der Stationssignale an eine positionsbezogene Empfangsdatensätze abrufbar speichernde Servervorrichtung zu übermitteln, als Reaktion auf die an die Servervorrichtung (24) übermittelten Daten anhand der Positionsdaten einen positionsbezogenen Empfangsdatensatz für das ausgewählte der Stationssignale vom Funkempfangsgerät zu empfangen und das Funkempfangsgerät (10, 12) zum Empfangen und Ausgeben des ausgewählten der Stationssignale anhand des empfangenen positionsbezogenen Empfangsdatensatzes auf diesen Kommunikationskanal (16, 18, 20, 22) einzustellen, **dadurch gekennzeichnet, dass** das Funkempfangsgerät (10, 12) ausgebildet ist, das ausgewählte der Stationssignale über wenigstens zwei voneinander unterschiedliche Kommunikationskanäle (16, 18, 20, 22) zu empfangen und Differenzdaten, welche durch den positionsbezogenen Empfangsdatensatz umfasst sind, zu erhalten.

9. Kraftfahrzeug mit einem Funkempfangsgerät,
**dadurch gekennzeichnet, dass** das Funkempfangsgerät (10, 12) nach Anspruch 7 oder 8 ausgebildet ist.

## Claims

1. Method for operating a wireless receiver (10, 12) which receives station signals transmitted via communication channels (16, 18, 20, 22) from transmitting stations (14) and emits a selected one of the station signals, wherein the method comprises the following steps:
- determining the communication channels (16, 18, 20, 22) for a particular one of the station signals via which the particular one of the station signals is transmitted,
- detecting reception properties for the determined communication channels (16, 18, 20, 22),
- detecting position data of the wireless receiver (10, 12),
- assigning the position data to the reception properties detected with regard to the determined communication channels (16, 18, 20, 22), wherein a position-related received data set is determined for at least one of the station signals, and
- transmitting the at least one position-related received data set to a server device (24) in order to store the at least one position-related received data set so that it is retrievable by the server device (24),
**characterised in that**
at least one of the station signals is received via at least two mutually different communication channels (16, 18, 20, 22), difference data at least with regard to the respective standardised volume levels and a respective relative time offset of the station signal are determined and included within the position-related received data set.

2. Method according to claim 1,
**characterised in that** at least the detection of the reception properties of the determined communication channels (16, 18, 20, 22) and of the position data of the wireless receiver takes place at at least one predetermined time.

3. Method according to any of the preceding claims,
**characterised in that** the position data of the wireless receiver are determined again at at least one predetermined time and the method is repeated if the position data of the wireless receiver have changed.

4. Method according to any of the preceding claims,
**characterised in that** the reception properties comprise at least a received signal strength, a standardised volume value, a reception quality value, a modulation type and/or an encoding type.

5. Method for operating a wireless receiver (10, 12) which receives station signals transmitted via communication channels (16, 18, 20, 22) from transmitting stations (14) and outputs a selected one of the station signals, wherein the method comprises the steps that position data of the wireless receiver (10, 12) are determined, at least the position data as well as data on the selected one of the station signals are transmitted to a server device (24) which stores position-related received data sets in a retrievable manner, in response to the data transmitted to the server device (24), a position-related received data set for the selected one of the station signals is received by the wireless receiver (10, 12) on the basis of the position data, and the wireless receiver (10, 12) sets the communication channel on the basis of the received position-related received data set in order to receive and output the selected one of the station signals, **characterised in that** the selected one of the station signals is received via at least two mutually different communication channels (16, 18, 20, 22) and difference data are obtained at least with regard to the respective standardised volumes and a respective relative time offset of the station signal, which data are included within the position-related received data set.

6. Method according to claim 5,
**characterised in that** the wireless receiver (10, 12) is arranged on a motor vehicle, wherein the motor vehicle is guided according to a route predetermined by a navigation device and wherein the position data of the wireless receiver (10, 12) are determined on the basis of the predetermined route.

7. Wireless receiver (10, 12) designed to receive station signals transmitted via communication channels (16, 18, 20, 22) from transmitting stations (14) and to emit a selected one of the station signals, wherein the wireless receiver (10, 12) is further designed to:
- determine the communication channels (16, 18, 20, 22) for a particular one of the station signals via which the particular one of the station signals is transmitted,
- detect reception properties for the determined communication channels (16, 18, 20, 22),
the wireless receiver (10, 12) is further designed to
- detect position data of the wireless receiver (10, 12),
- assign the position data to the reception properties detected with regard to the determined communication channels (16, 18, 20, 22) in order to determine a position-related received data set for at least one of the station signals, and
- transmit the at least one position-related received data set to a server device (24),
**characterised in that**
the wireless receiver (10, 12) is designed to receive at least one of the station signals via at least two mutually different communication channels (16, 18, 20, 22), determine difference data at least with regard to the respective standardised volume levels and a respective relative time offset of the station signal and include them within the position-related received data set.

8. Wireless receiver (10, 12) designed to receive station signals transmitted via communication channels (16, 18, 20, 22) from transmitting stations (14) and to output a selected one of the station signals, wherein the wireless receiver (10, 12) is further designed to determine position data of the wireless receiver (10, 12), to transmit at least the position data as well as data on the selected one of the station signals to a server device which stores position-related received data sets in a retrievable manner, to receive, in response to the data transmitted to the server device (24), a position-related received data set for the selected one of the station signals on the basis of the position data, and to set the wireless receiver (10, 12), in order to receive and output the selected one of the station signals, to this communication channel (16, 18, 20, 22) on the basis of the received position-related received data set, **characterised in that** the wireless receiver (10, 12) is designed to receive the selected one of the station signals via at least two mutually different communication channels (16, 18, 20, 22) and to obtain difference data which are included within the position-related received data set.

9. Motor vehicle having a wireless receiver,
**characterised in that** the wireless receiver (10, 12) is designed according to claim 7 or 8.

## Revendications

1. Procédé de fonctionnement d'un appareil de réception radio (10, 12) qui reçoit des signaux de station transférés via des canaux de communication (16, 18, 20, 22) à partir de stations d'émission (14) et émet un signal choisi des signaux de station, dans lequel le procédé comprend les étapes suivantes :
- détermination des canaux de communication (16, 18, 20, 22) pour un signal respectif des signaux de station via lesquels le signal respectif des signaux de station est transféré,
- détection de propriétés de réception pour les canaux de communication déterminés (16, 18, 20, 22),
- détection de données de position de l'appareil de réception radio (10, 12),
- association des données de position aux propriétés de réception détectées par rapport aux canaux de communication déterminés (16, 18, 20, 22), dans lequel pour au moins un des signaux de station un jeu de données de réception se rapportant à la position est déterminé, et
- transmission de l'au moins un jeu de données de réception se rapportant à la position à au moins un dispositif de serveur (24) pour mémoriser de manière à le récupérer par le dispositif de serveur (24) l'au moins un jeu de données de réception se rapportant à la position,
**caractérisé en ce que**
au moins l'un des signaux de station est reçu via au moins deux canaux de communication différents l'un de l'autre (16, 18, 20, 22), des données de différence concernant au moins les volumes sonores standardisés respectifs et un décalage temporel relatif respectif du signal de station sont déterminées et comprises par le jeu de données de réception se rapportant à la position.

2. Procédé selon la revendication 1,
**caractérisé en ce qu'**au moins la détection des propriétés de réception des canaux de communication déterminés (16, 18, 20, 22) et des données de position de l'appareil de réception radio se produit au moins à un moment prédéfini.

3. Procédé selon l'une quelconque des revendications précédentes,
**caractérisé en ce que** les données de position de l'appareil de réception radio sont de nouveau déterminées à au moins un moment prédéfini et le procédé est répété pour des données de position modifiées de l'appareil de réception radio.

4. Procédé selon l'une quelconque des revendications précédentes,
**caractérisé en ce que** les propriétés de réception comprennent au moins une intensité de signal de réception, une valeur de volume sonore standardisé, une valeur pour une qualité de réception, un type de modulation et/ou un type de codage.

5. Procédé pour le fonctionnement d'un appareil de réception radio (10, 12) qui reçoit des signaux de station transférés via des canaux de communication (16,18, 20, 22) à partir de stations d'émission (14) et émet un signal sélectionné des signaux de station, dans lequel le procédé comprend les étapes selon lesquelles des données de position de l'appareil de réception radio (10, 12) sont déterminées, au moins les données de position ainsi que des données pour un signal sélectionné des signaux de station sont transmises à un dispositif de serveur (24) mémorisant de manière à les récupérer des jeux de données de réception se rapportant à la position, en réaction aux données transmises au dispositif de serveur (24) à l'aide des données de position un jeu de données de réception se rapportant à la position pour le signal sélectionné des signaux de station est reçu par l'appareil de réception radio (10, 12) et l'appareil de réception radio (10, 12) pour la réception et l'émission du signal sélectionné des signaux de station règle le canal de communication à l'aide du jeu de données de réception se rapportant à la position reçu, **caractérisé en ce que** le signal sélectionné des signaux de station est reçu via au moins deux canaux de communication différents l'un de l'autre (16, 18, 20, 22) et des données de différence au moins concernant les volumes sonores standardisés respectifs et un décalage temporel relatif respectif du signal de station, qui sont compris par le jeu de données de réception se rapportant à la position, sont obtenues.

6. Procédé selon la revendication 5,
**caractérisé en ce que** l'appareil de réception radio (10, 12) est disposé au niveau d'un véhicule à moteur, dans lequel le véhicule à moteur est conduit selon une route prédéfinie par un appareil de navigation et dans lequel les données de position de l'appareil de réception radio (10, 12) sont déterminées à l'aide de la route prédéfinie.

7. Appareil de réception de données (10, 12) qui est réalisé pour recevoir des signaux de station transférés via des canaux de communication (16, 18, 20, 22) à partir de stations d'émission (14) et pour émettre un signal sélectionné des signaux de station, dans lequel l'appareil de réception radio (10, 12) est en outre réalisé pour :
- déterminer les canaux de communication (16, 18, 20, 22) pour un signal respectif des signaux de station via lesquels le signal respectif des signaux de station est transféré,
- détecter des propriétés de réception pour les canaux de communication déterminés (16, 18, 20, 22),
l'appareil de réception radio (10, 12) est en outre configuré pour
- détecter des données de position de l'appareil de réception radio (10, 12),
- associer les données de position aux propriétés de réception détectées concernant les canaux de communication déterminés (16, 18, 20, 22) pour déterminer pour au moins un des signaux de station un jeu de données de réception se rapportant à la position, et
- transmettre l'au moins un jeu de données de réception se rapportant à un dispositif de serveur (24),
**caractérisé en ce que**
l'appareil de réception radio (10, 12) est réalisé pour recevoir au moins un des signaux de station via au moins deux canaux de communication différents l'un de l'autre (16, 18, 20, 22), déterminer des données de différence concernant au moins des volumes sonores standardisés respectifs et un décalage temporel relatif respectif du signal de station et les comprendre par le jeu de données de réception se rapportant à la position.

8. Appareil de réception radio (10,12) qui est réalisé pour recevoir des signaux de station transférés via des canaux de communication (16, 18, 20, 22) à partir de stations d'émission (14) et émettre un signal sélectionné des signaux de station, dans lequel l'appareil de réception radio (10, 12) est en outre réalisé pour déterminer des données de position de l'appareil de réception radio (10, 12), transmettre au moins les données de position ainsi que des données pour un signal sélectionné des signaux de station à un dispositif de serveur mémorisant de manière à les récupérer des jeux de données de réception se rapportant à la position, recevoir par l'appareil de réception radio à l'aide des données de position en réaction aux données transmises au dispositif de serveur (24) un jeu de données de réception se rapportant à la position pour le signal sélectionné de signaux de station et régler l'appareil de réception radio (10, 12) pour la réception et l'émission du signal sélectionné de signaux de station à l'aide du jeu de données de réception se rapportant à la position reçu sur ce canal de communication (16, 18, 20, 22), **caractérisé en ce que** l'appareil de réception radio (10, 12) est réalisé pour obtenir le signal sélectionné des signaux de station via au moins deux canaux de communication(16, 18, 20, 22) différents l'un de l'autre et des données de différence qui sont comprises par le jeu de données de réception se rapportant à la position.

9. Véhicule à moteur avec un appareil de réception radio,
**caractérisé en ce que** l'appareil de réception radio (10, 12) est réalisé selon la revendication 7 ou 8.
